# EUROPÄISCHE PATENTSCHRIFT

(11) **EP 2 858 060 B1**
(45) Veröffentlichungstag und Bekanntmachung des Hinweises auf die Patenterteilung: **14.03.2018**
(21) Anmeldenummer: 14003342.4
(22) Anmeldetag: 27.09.2014
(51) Int. Cl.: G08G 1/16, B60W 30/09, G08G 1/0962

(54) **Kraftfahrzeug und Verfahren zur Steuerung eines Kraftfahrzeugs**
Method for controlling a motor vehicle and motor vehicle
Véhicule automobile et procédé de commande d'un véhicule automobile

(30) Priorität: 02.10.2013 DE 102013016434
(43) Veröffentlichungstag der Anmeldung: 08.04.2015
(73) Patentinhaber: AUDI AG, 85045 Ingolstadt (DE)
(72) Erfinder: Danzl, Martin, DE - 83115 Neubeuern (DE); Wüst, Sabine, DE - 85051 Ingolstadt (DE); Gollewski, Torsten, DE - 85080 Gaimersheim (DE); Kienzl, Georg, DE - 85055 Ingolstadt (DE); Hagemann, Franz-Michael, 85120 Hepberg (DE); Siedersberger, Karl-Heinz, DE - 86669 Königsmoos (DE); Miehling, Thomas, DE - 85057 Ingolstadt (DE); Kunsch, Peter, DE - 85123 Karlskron (DE)
(74) Vertreter: Thielmann, Frank

(56) Entgegenhaltungen:
- WO-A1-2005/054008
- DE-A1-102009 020 649
- DE-A1-102011 012 784
- DE-A1-102012 203 187
- US-A1- 2010 235 099

## Beschreibung

Die Erfindung betrifft ein Kraftfahrzeug umfassend wenigstens ein Fahrerassistenzsystem, das insbesondere ein Sicherheitssystem ist und das ausgebildet ist, bei Erfüllung einer Auslösebedingung oder wenigstens einer von mehreren Auslösebedingungen eine Hinweiseinrichtung zur Gabe eines Hinweises an einen Fahrer und/oder an Dritte anzusteuern und/oder in die Fahrzeugführung einzugreifen.

Moderne Kraftfahrzeuge weisen eine Vielzahl von Fahrerassistenzsystemen auf, die der Steigerung der Fahrsicherheit und/oder des Fahrkomforts dienen. Insbesondere sind Fahrerassistenzsysteme bekannt, die abhängig von einem Ist-Zustand des Kraftfahrzeugs in die Steuerung der Kraftfahrzeugsysteme eingreifen, wie beispielsweise Antiblockiersysteme oder Spurstabilisierungssysteme. Daneben sind Komfortsysteme wie Spurhalteassistenzsysteme oder automatische Abstandsregelungen bekannt, die aus Egodaten und Umfelddaten eines Kraftfahrzeugs Voraussagen über künftige Fahrsituationen berechnen und das Kraftfahrzeug entsprechend dieser Voraussagen steuern. Es ist bekannt, dass diese teilautonomen Steuersysteme Steueraufgaben häufig mit einer geringeren Reaktionszeit und einer höheren Genauigkeit durchführen als ein menschlicher Fahrer. Damit kann ein autonomer Fahrbetrieb in vielen Fahrsituationen zu einem verbesserten Fahrverhalten des Fahrzeugs gegenüber einer Steuerung durch einen menschlichen Fahrer führen. Die Druckschrift US 2010/0235099 A1 offenbart eine Fahrerassistenzeinrichtung. Durch diese wird ein Hindernis detektiert und es wird eine Eingriffstrajektorie berechnet, entlang der das Fahrzeug geführt werden kann, wenn das Fahrerassistenzsystem in den Fährbetrieb eingreift. Durch eine Bestimmungseinrichtung wird bestimmt, ob die Zahl von Eingriffstrajektorien, die nicht mit dem Hindernis überlappen, kleiner oder gleich einer vorgegebenen Zahl ist. Um die Vorteile der schnelleren und genaueren Steuerung des Kraftfahrzeugs bei einem autonomen Fahrbetrieb zur Verbesserung der Sicherheit zu nutzen, ist es bekannt, Systeme einzusetzen, die drohende Kollisionen mit weiteren Kraftfahrzeugen erkennen und versuchen, diese Kollisionen zu vermeiden beziehungsweise die Auswirkungen der Kollisionen zu verringern.

Hierzu wird in den Fahrbetrieb eingegriffen, um das Kraftfahrzeug kontrolliert zum Stillstand zu bringen. Nachteilig ist hierbei, dass die erreichte Position des Kraftfahrzeugs häufig nicht ideal ist, wobei das zum Stillstand gebrachte Kraftfahrzeug ein Hindernis für weitere Verkehrsteilnehmer darstellt. Zudem ist es wünschenswert, autonome Fahreingriffe auch in anderen Fahrsituationen zu nutzen, um ein insgesamt verbessertes Fahrverhalten des Kraftfahrzeugs in kritischen Situationen zu erreichen, ohne die Handlungsfreiheit des Fahrers unnötig einzuschränken. Wesentlich ist somit bei der Entwicklung solcher Fahrerassistenzsysteme, den Eingreifzeitpunkt des Fahrerassistenzsystems so zu bestimmen, dass ein Eingreifen des Fahrerassistenzsystems für den Fahrer nachvollziehbar und gewünscht ist, was für ein relativ spätes Eingreifen des Fahrerassistenzsystems spricht, ohne dabei die Leistungsfähigkeit des Fahrerassistenzsystems einzuschränken.

In vielen Fahrsituationen ist es auch vorteilhaft möglich, den Fahrer frühzeitig auf eine kritische Fahrsituation hinzuweisen und so zu verhindern, dass ein Eingreifen autonomer Fahrsysteme zur Aufrechterhaltung des sicheren Fahrbetriebs überhaupt notwendig ist. Werden derartige Warnsysteme häufig und in Situationen aktiviert, in denen ein Fahrer die Fahrsituation selbst noch nicht als kritisch einschätzen würde, so werden diese Warnsysteme von Fahrern typischerweise nicht akzeptiert und soweit möglich deaktiviert bzw. deren Warnhinweise ignoriert. Auch für Warnsysteme im Kraftfahrzeug, die den Fahrer vor potenziellen Risikosituationen warnen, ist es daher notwendig, den Warnzeitpunkt so zu bestimmen, dass die Warnung für den Fahrer nachvollziehbar und gewünscht ist, ohne dabei die Leistungsfähigkeit des Warnsystems einzuschränken.

Der Erfindung liegt daher die Aufgabe zugrunde, ein Kraftfahrzeug anzugeben, das ein Fahrerassistenzsystem aufweist, das in die Fahrzeugführung eingreifen oder Hinweise an einen Fahrer geben kann, wobei die Bestimmung des Warn- bzw. Eingriffszeitpunktes verbessert ist. Diese Aufgabe wird durch das Kraftfahrzeug sowie das Verfahren zur Steuerung des Kraftfahrzeugs gemäß den unabhängigen Ansprüchen gelöst. Vorteilhafte Ausgestaltungen sind Gegenstand der abhängigen Ansprüche. Der Erfindung liegt die Idee zugrunde, dass sich kritische Fahrsituationen, also Fahrsituationen, in denen ein Eingriff eines Fahrerassistenzsystems notwendig und gewünscht ist oder in denen ein Warnhinweis an einen Fahrer gegeben werden soll, dadurch auszeichnen, dass nur eine geringe Anzahl von Fahrmöglichkeiten für das Kraftfahrzeug verbleibt, um das Kraftfahrzeug sicher, das heißt insbesondere ohne Schäden an Personen, dem Kraftfahrzeug selbst oder Drittgegenständen zu riskieren, durch eine aktuelle oder zeitlich nah vorausliegende Fahrsituation zu bewegen. Eine solche Fahrsituation kann also dadurch erkannt werden, dass erfindungsgemäß unter wenigstens einer Randbedingung fahrbare Trajektorien und/oder Trajektorienscharen berechnet werden und aus den berechneten Trajektorien bzw. Trajektorienscharen bestimmt wird, wie groß die Menge der Fahrmöglichkeiten ist, die einem Fahrer verbleiben.

Die Randbedingungen bei der Bestimmung der Trajektorien bzw. Trajektorienscharen stellen dabei insbesondere sicher, dass bei einer Bewegung des Kraftfahrzeugs entlang einer der berechneten Trajektorien oder entlang einer Schartrajektorie, die durch eine der berechneten Trajektorienscharen bestimmt ist, das Kraftfahrzeug kontrolliert und sicher bewegt werden kann. Ergänzend können die Randbedingungen zur Berechnung der Trajektorien bzw. Trajektorienscharen auch die Eigenschaften eines Fahrers, beispielsweise ein eher sportliches oder ein komfortbetontes Fahrverhalten, berücksichtigen. So können beispielsweise zunächst nur Trajektorien und/oder Trajektorienscharen berechnet werden, die innerhalb eines Komfortbereichs oder eines individuellen Grenzbereichs eines Fahrers, in dem der Fahrer voraussichtlich fähig wäre, die berechneten Trajektorien selbstständig zu durchfahren, liegen.

Die Trajektorien können insbesondere derart berechnet werden, dass Parameter der Trajektorien in diskreten Stufen berechnet werden. Beispielsweise kann, indem die Ortsauflösung auf eine Auflösung von einigen Zentimetern eingeschränkt wird, die Anzahl der zu berechneten Trajektorien stark eingeschränkt werden, ohne kritische Informationen zu verlieren. Alternativ oder ergänzend ist es auch möglich, dass die Trajektorien als Schartrajektorien von Trajektorienscharen bestimmt werden, das heißt, dass für wenigstens einen Parameter der Trajektorie eine funktionale Abhängigkeit der Trajektorie von diesem Parameter vorgegeben ist und für diesen Parameter ein Wertebereich bestimmt wird. Beispielsweise kann der Verlauf einer Trajektorie durch einen Spline, insbesondere einen B-Spline, beschrieben werden und die Parametrisierung kann über die Festlegung einer relativ kleinen Zahl von Stützpunkten erfolgen. Es ist jedoch auch möglich, Trajektorienscharen derart zu bestimmen, dass zwischen zwei oder mehr einzeln berechneten Trajektorien durch Variation eines Trajektorienparameters, insbesondere eines Lenkwinkels, eines minimalen Kurvenradiuses oder Ähnlichem, interpoliert wird.

Die Bestimmung des Fahrmöglichkeitswertes ist besonders einfach möglich, wenn einzelne Trajektorien bestimmt wurden. Im einfachsten Fall kann der Fahrmöglichkeitswert dann gleich der Anzahl der berechneten fahrbaren Trajektorien sein. Selbstverständlich kann die Zahl der berechneten Trajektorien zur Berechnung des Fahrmöglichkeitswertes auch skaliert, mit einem Offset versehen oder unter Berücksichtigung weiterer Parameter weiterverarbeitet werden, um einen Fahrmöglichkeitswert zu bestimmen. Es ist auch möglich, dass die berechneten Trajektorien zunächst weiterverarbeitet werden, bevor ein Fahrmöglichkeitswert bestimmt wird, wobei insbesondere Trajektorien in Abhängigkeit einer nachgelagerten Randbedingung verworfen werden können. So kann es implementationsabhängig vorteilhaft sein, bei der Berechnung der fahrbaren Trajektorien und/oder Trajektorienscharen zunächst nur einige Randbedingungen zu berücksichtigen und die weiteren Randbedingungen anschließend zu nutzen, um Trajektorien und/oder Trajektorienscharen und/oder Teile von Trajektorienscharen zu verwerfen.

Besonders vorteilhaft ist es, als nachgelagerte Randbedingung ein Verhältnis der fahrbaren Trajektorien untereinander zu berücksichtigen. Dabei ist es insbesondere möglich, dass Trajektorien, die über ihre gesamte Länge oder in einem relevanten Bereich in wenigstens einem ihrer Parameter sehr nahe aneinander verlaufen, als eine einzelne Trajektorie gewertet werden.

Wurden fahrbare Trajektorienscharen bestimmt, so kann der Fahrmöglichkeitswert insbesondere aus einem Wertebereich eines oder mehrerer Parameter der Trajektorienschar bestimmt werden. Bei der Berücksichtigung mehrerer Parameter können insbesondere die Wertebereiche der Parameter multipliziert werden, um somit ein "Volumen" der Trajektorie zu bestimmen. Handelt es sich bei den Parametern um Parameter, die entlang einer Trajektorie variieren, so kann dieses Produkt beispielsweise auch durch ein Integral über die Wertebereiche der Parameter entlang der Trajektorie ersetzt werden. Es ist dabei möglich, dass bei der Bestimmung des Fahrmöglichkeitswertes ausschließlich der Wertebereich bzw. das "Volumen" der Trajektorienschar mit dem größten Wertebereich bzw. "Volumen" berücksichtigt wird, die Wertebereiche bzw. "Volumen" können jedoch auch für einige oder alle Trajektorienscharen aufsummiert werden.

Bei Erfüllen der Auslösebedingung können eine Vielzahl von Eingriffen in die Fahrzeugführung erfolgen. Aufgrund der Nutzung einer vorausschauenden Auslösebedingung können beispielsweise Eingriffe in die Längs- und/oder Querführung des Kraftfahrzeugs bereits frühzeitig durchgeführt werden, wodurch häufig ein plötzliches und starkes Eingreifen des Fahrerassistenzsystems in die Fahrzeugführung vermieden werden kann. Dabei kann der Eingriff in die Fahrzeugführung derart erfolgen, dass die Fahrzeugführung zwar beim Fahrer verbleibt, jedoch die Steuerung von Fahrzeugsystemen, insbesondere der Bremsen und der Lenkung, zusätzlich mit durch das Fahrerassistenzsystem bestimmten Beiträgen beaufschlagt wird. Es kann jedoch auch vorteilhaft sein, bei Erfüllen der Auslösebedingung das Kraftfahrzeug vollständig autonom zu führen. Es ist auch möglich, dass im erfindungsgemäßen Kraftfahrzeug ein abgestuftes Vorgehen vorgesehen ist, bei dem bei Unterschreiten eines ersten Grenzwertes der Eingriff in die Fahrzeugführung auch derart erfolgt, dass eine Übersteuerung des Fahreingriffs durch den Fahrer möglich ist, jedoch bei Unterschreiten eines zweiten Grenzwertes das Kraftfahrzeug autonom durch das Fahrerassistenzsystem geführt wird.

Ergänzend ist auch möglich, dass im erfindungsgemäßen Kraftfahrzeug Warnungen an andere Verkehrsteilnehmer ausgegeben werden, wenn die Auslösebedingung erfüllt ist. Solche Warnungen können durch eine Car2X- oder Car2Car-Kommunikation erfolgen, es ist jedoch auch möglich, Warneinrichtungen des Kraftfahrzeugs, wie eine Hupe oder an der Karosserie angeordnete Warnleuchten, anzusteuern.

Eine wesentliche Randbedingung für die fahrbaren Trajektorien bzw. Trajektorienscharen ist es, dass die Bereiche, durch die die berechneten Trajektorien verlaufen, durch das Kraftfahrzeug auch befahrbar sind. Daher ist es möglich, dass das Fahrerassistenzsystem zur Bestimmung wenigstens eines an der Position des Kraftfahrzeugs beginnenden Fahrbereichs, der durch das Kraftfahrzeug befahrbar ist, ausgebildet ist, wobei die Randbedingung oder eine der Randbedingungen ist, dass die Trajektorien und/oder Trajektorienscharen vollständig innerhalb des Fahrbereichs verlaufen. Dabei ist es möglich, dass der Fahrbereich derart bestimmt wird, dass durch Hindernisse blockierte Bereiche aus dem Fahrbereich ausgeschlossen werden. Es ist jedoch auch möglich, durch Hindernisse blockierte Bereiche zunächst im Fahrbereich zu belassen und im Fahrbereich vorhandene Hindernisse direkt bei der Trajektorienberechnung zu berücksichtigen, so dass die Hindernisse durch die berechneten Trajektorien vermieden werden. Damit ist ein Bereich bekannt, durch den die Trajektorien verlaufen können. Typischerweise wird ein solcher Bereich als der Bereich der Fahrbahn, der keine Hindernisse umfasst, bestimmt, es ist jedoch auch möglich, gewisse Bereiche der Fahrbahn auszuschließen oder zusätzliche Bereiche zum Fahrbereich hinzuzunehmen. Nicht jeder Teil des Fahrbereichs kann notwendigerweise durch eine fahrbare Trajektorie erreicht werden, da die fahrbaren Trajektorien beispielsweise durch den möglichen Lenkwinkel des Kraftfahrzeugs begrenzt sind.

Es ist möglich, dass bereits bei der Festlegung des Fahrbereichs Sicherheitsabstände zu Hindernissen berücksichtigt werden. Alternativ kann die Berücksichtigung von Sicherheitsabständen jedoch auch nachträglich erfolgen, indem alle Trajektorien vom Rand des Fahrbereichs beabstandet werden. Es ist zu beachten, dass der Fahrbereich nur dann zeitunabhängig ist, wenn keine bewegten Hindernisse im Fahrzeugumfeld vorhanden sind oder von bewegten Hindernissen blockierte Bereiche erst bei der Trajektorienberechnung selbst berücksichtigt werden. Bewegte Hindernisse können berücksichtigt werden, indem ein zeitabhängiger Fahrbereich bestimmt wird. Zur Vereinfachung der Berechnung ist es jedoch auch möglich, alle Bereiche, die innerhalb eines vorgegebenen Zeitintervalls von bewegten Hindernissen überstrichen werden, zunächst aus dem Fahrbereich auszunehmen. Dadurch ist auch bei Vorhandensein von bewegten Objekten eine besonders einfache Berechnung von Trajektorien möglich und die rechenaufwendige Nutzung eines zeitabhängigen Fahrbereichs muss erst dann erfolgen, wenn bei Nutzung des zuvor bestimmten Fahrbereichs keine oder sehr wenige Trajektorien gefunden wurden.

Die die Trajektorien beschreibenden Parameter, insbesondere die Ortskoordinaten, sind typischerweise kontinuierliche Variablen. Dadurch müssten selbst bei einer technisch bedingten endlichen Auflösung sehr viele einzelne Trajektorien berechnet werden, um die möglichen Trajektorien zu finden. Daher können die Trajektorien, wie bereits erläutert, als Trajektorienscharen bestimmt werden, es ist jedoch auch möglich, dass das Fahrerassistenzsystem ausgebildet ist, die Trajektorien derart zu berechnen, dass sie durch einen vorgegebenen oder anpassbaren Abstand wenigstens eines ihrer Parameter, insbesondere einer Ortskoordinate, beabstandet sind. Bei dem vorgegebenen anpassbaren Abstand kann es sich um einen Mindestabstand der Trajektorien in dem entsprechenden Parameter handeln. Es kann aber auch der mittlere Abstand, der Median oder Ähnliches betrachtet werden. Es ist dabei möglich, dass der Abstand der Trajektorien nur innerhalb eines relevanten Bereichs bzw. Zeitraums berücksichtigt wird. So kann beim Durchfahren einer Kurve oder beim Passieren eines Hindernisses beispielsweise nur der Teil der Trajektorien bei der Bestimmung des Abstands zwischen den Trajektorien berücksichtigt werden, der innerhalb der Kurve oder im Bereich des Hindernisses liegt. Selbstverständlich ist es auch möglich, vorzusehen, die Trajektorien in mehreren Parametern zu beabstanden. Dabei kann für jeden der Parameter ein getrennter Mindestabstand vorgesehen sein oder es kann beispielsweise eine gewichtete Summe über die Abstände mehrerer Parameter gebildet werden und mit einem Grenzwert für diese Summe verglichen werden.

Die Bestimmung einzelner beabstandeter Trajektorien ist insbesondere vorteilhaft, wenn komplexe Berechnungsverfahren für die Trajektorien, also beispielsweise eine Berechnung der Trajektorien anhand eines simulierten physikalischen Modells, genutzt werden. In solchen Verfahren kann die Berechnung kontinuierlicher Trajektorienscharen sehr aufwendig sein und durch die Diskretisierung insbesondere aller Parameter kann der Berechnungsaufwand erheblich gesenkt werden.

Zur Berechnung der Trajektorien bzw. Trajektorienscharen ist eine Vielzahl von Ansätzen möglich. Wie erwähnt ist es besonders einfach, zunächst ausschließlich Ortskurven als Trajektorien zu bestimmen. In diesem Fall können zunächst Fahrschläuche ermittelt werden, innerhalb derer sich kein Hindernis befindet. Ein Fahrschlauch bezeichnet in diesem Fall einen Bereich, der vollständig durch fahrbare Trajektorien bedeckt werden kann. Ein solcher Fahrschlauch und die zwischen den Grenzen des Fahrschlauchs liegenden Trajektorien können dadurch beschrieben werden, dass zunächst zwei geometrische Begrenzungstrajektorien für den Fahrschlauch bestimmt werden, die den Fahrschlauch begrenzen. Solche Begrenzungstrajektorien weisen typischerweise einen vorgegebenen Abstand vom Rand eines Fahrbereichs auf. Das heißt, sie laufen mit einem vorgegebenen Sicherheitsabstand an Hindernissen in der Fahrzeugumgebung vorbei. Ist zwischen zwei dieser Begrenzungstrajektorien kein Hindernis, so wird typischerweise ein Fahrschlauch durch diese beiden Begrenzungstrajektorien gebildet, falls die Trajektorien zwischen ihnen befahrbar sind. Ergänzend kann innerhalb des Fahrschlauchs noch eine Idealtrajektorie bestimmt werden, die beispielsweise die kürzeste Strecke bis zu einem vorgegebenen Punkt oder Streckenabschnitt beschreibt, die mit der höchsten Geschwindigkeit befahrbar ist oder Ähnliches.

Die weiteren Trajektorien des Fahrschlauchs können dann berechnet werden, indem zwischen den beiden Begrenzungstrajektorien beziehungsweise zwischen den Begrenzungstrajektorien und der Idealtrajektorie interpoliert wird. Alternativ ist es auch möglich, die Idealtrajektorie zu variieren, beispielsweise indem zur Idealtrajektorie benachbarte Trajektorien berechnet werden, die nur in eine Richtung von der Idealtrajektorie abweichen und vorzugsweise genauso viele oder weniger Wendepunkte aufweisen. Wird das erläuterte Verfahren für jeden Teil des Fahrbereichs durchgeführt, durch den ein Fahrschlauch führbar ist, so können zumindest diejenigen Trajektorien im Fahrbereich ermittelt werden, die von Fahrzeugen typischerweise befahren werden und die mit den höchsten Geschwindigkeiten fahrbar sind beziehungsweise bei vorgegebener Geschwindigkeit zu den geringsten Kräften in Querrichtung zum Kraftfahrzeug führen.

In diesem Zusammenhang ist wesentlich, dass es unnötig ist, jede fahrbare Trajektorie zu bestimmen. Die Berechnung der fahrbaren Trajektorie dient zunächst nur dazu zu ermitteln, ob voraussichtlich eine kritische Fahrsituation vorliegt. Kritische Fahrsituationen zeichnen sich jedoch dadurch aus, dass die Parameter, die eine Weiterfahrt des Kraftfahrzeugs ermöglichen, relativ stark eingegrenzt sind. Dies bedeutet jedoch, dass in den kritischen Fahrsituationen, die erkannt werden sollen, beispielsweise Trajektorien mit einer Vielzahl von notwendigen Wendepunkten ohnehin nicht fahrbar sind. Es ist also ausreichend, wenn, wie beschreiben, nur einfache Trajektorien mit wenigen Wendepunkten berechnet werden.

Das Fahrerassistenzsystem kann insbesondere zur Bestimmung wenigstens eines Geschwindigkeitsprofils für jede der berechneten Trajektorien und/oder jede der berechneten Trajektorienscharen ausgebildet sein. Als Geschwindigkeitsprofil kann insbesondere das Profil der maximal möglichen Geschwindigkeiten für jeden Punkt der Trajektorie innerhalb der physikalisch vorgegebenen Grenzen oder innerhalb eines Komfortbereichs oder individuellen Grenzbereichs eines Fahrers bestimmt werden. Dabei kann ein solches Maximalgeschwindigkeitsprofil insbesondere ausgehend von der Ist-Geschwindigkeit des Kraftfahrzeugs unter Berücksichtigung der maximalen Beschleunigung bzw. Verzögerung des Kraftfahrzeugs bestimmt werden. Alternativ kann zunächst für die Punkte entlang der Trajektorie unabhängig jeweils eine maximale Geschwindigkeit bestimmt werden, anschließend der Punkt ermittelt werden, für den die ermittelte maximale Geschwindigkeit am geringsten ist und ausgehend von diesem Punkt, unter Berücksichtigung der maximal möglichen Beschleunigung bzw. Verzögerung des Kraftfahrzeugs sowie der zuvor ermittelten maximalen Geschwindigkeiten für die weiteren Punkte, ein Geschwindigkeitsprofil ermittelt werden. Zur Berechnung des Geschwindigkeitsprofils für eine berechnete Trajektorienschar ist es insbesondere möglich, das Geschwindigkeitsprofil ebenfalls durch die Parameter der Trajektorienschar zu parametrisieren. Damit wird ein höherdimensionales Geschwindigkeitsprofil berechnet, das neben der Position entlang der Trajektorie auch durch die Parameter der Trajektorienschar parametrisiert ist. Alternativ ist es jedoch auch möglich, diskrete Geschwindigkeitsprofile für beabstandete Werte der Parameter der Trajektorienschar zu berechnen.

Ein Geschwindigkeitsprofil kann im einfachsten Fall ausgehend von dem Ortsverlauf der Trajektorie bestimmt werden, indem die Zentrifugalkräfte im Vorlauf der Trajektorie, die sich aus der Masse des Kraftfahrzeugs, der Geschwindigkeit des Kraftfahrzeugs an dem Punkt und der lokalen Krümmung der Trajektorie ergeben, mit einem vorgegebenen oder lokal bestimmten Grenzwert verglichen werden. Der Grenzwert für die Zentrifugalkraft entspricht der Reibungskraft zwischen dem Kraftfahrzeug und der Straße.

Es ist dabei möglich, dass ein solcher Grenzwert für jeden der Reifen des Kraftfahrzeugs getrennt bestimmt wird und mit Zentrifugalkräften, die an diesem Rad wirken, verglichen wird. Dies ist insbesondere vorteilhaft, da abhängig von Roll- und Nickwinkel des Kraftfahrzeugs unterschiedliche Normalkräfte auf die einzelnen Reifen wirken können, wodurch die Reibkraft selbst bei gleichem Reibungskoeffizienten unterschiedlich ist. Der Reibungskoeffizient zwischen Reifen und Straße kann fest vorgegeben sein, es ist jedoch auch möglich, ihn abhängig von beispielsweise der Reifenart, der Laufleistung des Reifens, den lokalen Eigenschaften der Straße, die beispielsweise durch eine Kamera erfasst wurden, oder den Witterungsbedingungen anzupassen.

Aus der global oder lokal bestimmten maximalen Reibkraft kann damit, unter Umständen unter Berücksichtigung eines Sicherheitsintervalls für die Reibkraft, eine maximal fahrbare Geschwindigkeit für jeden Punkt der Trajektorie festgelegt werden. Werden zusätzlich die maximalen Beschleunigungs- und Verzögerungswerte des Kraftfahrzeugs berücksichtigt, kann ein Geschwindigkeitsprofil der maximal möglichen Geschwindigkeiten für jeden Punkt der Trajektorie bestimmt werden.

Werden bewegte Hindernisse nicht derart berücksichtigt, dass von ihnen im betrachteten Zeitintervall überstrichene Bereiche vollständig aus dem Fahrbereich ausgenommen werden, so müssen zur Trajektorienberechnung ohnehin Geschwindigkeitsgrenzwerte berücksichtigt werden. In diesem Fall ist es vorteilhaft, zumindest zwei Geschwindigkeitsprofile für eine Trajektorie, nämlich eines für die Maximalgeschwindigkeiten und eines für die Minimalgeschwindigkeiten, am jeweiligen Ort der Trajektorie zu bestimmen.

Die berechneten fahrbaren Trajektorien bzw. fahrbaren Trajektorienscharen geben im Wesentlichen die Fahrmöglichkeiten für das Kraftfahrzeug unter den zur Berechnung genutzten Randbedingungen wieder. Daher kann der Fahrmöglichkeitswert die Anzahl der berechneten Trajektorien sein oder das Fahrerassistenzsystem kann ausgebildet sein, den Fahrmöglichkeitswert aus der Breite eines Wertebereichs wenigstens eines Parameters wenigstens einer der berechneten Trajektorienscharen zu bestimmen. Dabei ist es insbesondere möglich, dass bei der Bestimmung der Anzahl der berechneten Trajektorien in wenigstens einem Parameter, insbesondere in ihrem Abstand senkrecht zur Fahrrichtung, eng benachbarte Trajektorien als einzelne Trajektorie gezählt werden. Dabei ist es insbesondere möglich, dass zur Bestimmung des Abstands zwischen zwei Trajektorien nur ein vorgegebener oder aus den Umfelddaten bestimmter Bereich oder Zeitabschnitt betrachtet wird. So kann beispielsweise nur der Abstand von Trajektorien innerhalb einer Kurve oder im Bereich eines Hindernisses berücksichtigt werden.

Bei der Bestimmung des Maßes für die Menge der Fahrmöglichkeiten aus den berechneten Trajektorienscharen ist es möglich, nur eine der Trajektorienscharen zu berücksichtigen. Die hier zu berücksichtigende Trajektorienschar kann beispielsweise bestimmt werden, indem die Trajektorienschar mit dem breitesten Wertebereich in einem der Parameter gewählt wird. Es kann jedoch auch die Trajektorienschar gewählt werden, für die das Produkt der Breiten mehrerer Wertebereiche für verschiedene Parameter bzw. deren gewichtete Summe am größten ist. Es ist jedoch auch möglich, alle oder zumindest mehrere der berechneten Trajektorienscharen zu berücksichtigen, indem insbesondere ein Maß für die Menge der Fahrmöglichkeiten für jede der Trajektorien bestimmt wird und das Maß für die gesamte Menge der Fahrmöglichkeiten aus der Summe der Maße der Menge der Fahrmöglichkeiten innerhalb jeder der Trajektorienscharen berechnet wird.

Ein Maß für die Menge der Fahrmöglichkeiten, die durch eine der Trajektorienscharen repräsentiert wird, kann insbesondere dadurch bestimmt werden, dass die Breite des Wertebereiches eines der Parameter der Trajektorienschar ausgewertet wird. So kann beispielsweise die Breite einer Trajektorienschar senkrecht zur Bewegungsrichtung des Kraftfahrzeugs ausgewertet werden. Es ist jedoch auch möglich, "Flächen" bzw. "Volumen" für die Trajektorienscharen zu bestimmen, indem das Maß für die Fahrmöglichkeiten der Trajektorienschar durch ein Produkt der Wertebereiche mehrerer Parameter der Trajektorie gebildet wird. So kann beispielsweise der Wertebereich der möglichen Geschwindigkeiten mit der Breite der Trajektorienschar senkrecht zur Bewegungsrichtung des Fahrzeuges als Maß für die durch die Trajektorienschar dargestellte Menge von Fahrmöglichkeiten genutzt werden. Alternativ können mehrere Parameter dadurch berücksichtigt werden, dass eine gewichtete Summe über die jeweiligen Wertebereiche gebildet wird.

Die Wertebereiche für Parameter der Trajektorienschar variieren typischerweise entlang der Trajektorie. Daher ist es möglich, als Breite für den Wertebereich eine minimale Breite entlang der Trajektorie, einen mittleren Wert für die Breite des Wertebereichs, einen Median oder Ähnliches zu nutzen. Mittelwerte für einen Wertebereich können insbesondere durch eine Integration über die Breite des Wertebereichs entlang der Trajektorie bestimmt werden. Werden mehrere Parameter berücksichtigt, ist es auch möglich, ein mehrdimensionales Integral über all diese Parameter entlang der Trajektorie zu bestimmen.

Bei der Bestimmung des Wertebereichs für einen Parameter bzw. einer "Fläche" oder eines "Volumens" für die Trajektorienschar ist es auch möglich, ausschließlich einen vorgegebenen oder aus den Umfelddaten bestimmten Zeit- bzw. Ortsbereich zu berücksichtigen. Dabei kann der ermittelte Wertebereich insbesondere anschließend normiert werden. Es wird erfindungsgemäß vorgesehen, dass das Fahrerassistenzsystem ausgebildet ist, bei Erfüllung der Auslösebedingung oder wenigstens einer der Auslösebedingungen in einen zweiten Betriebsmodus zu wechseln und das Kraftfahrzeug im zweiten Betriebsmodus, insbesondere ohne Eingriffsmöglichkeit durch den Fahrer autonom, entlang einer der berechneten Trajektorien oder einer durch eine der berechneten Trajektorienscharen beschriebenen Schartrajektorie zu führen. Durch die Führung des Kraftfahrzeugs entlang einer vorberechneten Trajektorie ist vorteilhaft keine Neuberechnung einer Trajektorie notwendig. Der Wechsel in den zweiten Betriebsmodus kann insbesondere nur vorübergehend erfolgen und bei der Erfüllung einer oder mehrerer Rückgabebedingungen kann die Führung des Kraftfahrzeugs an den Fahrer des Kraftfahrzeugs übergeben werden. Durch die Führung des Kraftfahrzeugs entlang einer der fahrbaren Trajektorien bzw. Schartrajektorien wird im erfindungsgemäßen Kraftfahrzeug erreicht, dass auch nach dem Eingreifen des Fahrerassistenzsystems eine normale Weiterfahrt möglich ist. Der Fahrbetrieb des Kraftfahrzeugs wird also durch das Eingreifen des Fahrerassistenzsystems nicht unterbrochen, da das Kraftfahrzeug insbesondere nicht bis zum Stillstand gebremst wird, sondern der Fahrbetrieb entlang einer der fahrbaren Trajektorien bzw. Schartrajektorien fortgesetzt wird. Ein Stillstand des Kraftfahrzeugs wird vermieden und der Verkehrsfluss wird damit insgesamt weniger gestört als bei Sicherheitssystemen, die einen Stillstand des Kraftfahrzeugs herbeiführen. Zudem ist es durch die Fortführung des Fahrbetriebs möglich, die Belastung für den Fahrer zu verringern. Der Fahrer kann beim Betrieb des Fahrerassistenzsystems in dem zweiten Betriebsmodus zwar darauf hingewiesen werden, dass ein Eingriff des Fahrerassistenzsystems in den Fahrbetrieb erfolgt, insbesondere um den Fahrer darauf aufmerksam zu machen, dass er das Kraftfahrzeug nahe am physikalischen Grenzbereich oder voraussichtlich jenseits eines Komfortbereichs bewegt. Da plötzliche Bremsmanöver und der damit verbundene Schreck vermieden werden, wird die Fortsetzung der Fahrt jedoch für einen Großteil der Fahrer stark erleichtert. Die Rückgabebedingung kann dabei insbesondere auswerten, ob der Verkehr und die Straßenführung eine Rückübergabe der Fahrzeugführung an den Fahrer erlauben und/oder ob weitere Übernahmebedingungen erfüllt sind, beispielsweise dass der Lenkradwinkel dem Lenkwinkel entspricht.

Dabei wird das Fahrerassistenzsystem ausgebildet, im zweiten Betriebsmodus die Lenkung und/oder das Bremssystem und/oder den Motor und/oder das vorzugweise automatische Getriebe des Kraftfahrzeugs ohne Eingriffsmöglichkeit durch den Fahrer autonom zu steuern. Das Fahrerassistenzsystem des erfindungsgemäßen Kraftfahrzeugs soll insbesondere dann in den Fahrbetrieb eingreifen, wenn die Anzahl der Fahrmöglichkeiten für das Kraftfahrzeug sehr klein ist. Verbleibt in diesen Fahrsituationen die Kontrolle über einige der Systeme der Längs- oder Querführung des Kraftfahrzeugs bei dem Fahrer oder kann die Steuerung eines dieser Systeme durch das Fahrerassistenzsystem durch den Fahrer übersteuert werden, so ist es möglich, dass durch einen Fahreingriff des Fahrers die befahrbare Trajektorie, auf der das Kraftfahrzeug geführt wird, verlassen wird. Daher ist es vorteilhaft, zumindest Teile der Längs- und Querführungssysteme des Kraftfahrzeugs vollständig autonom, ohne Eingriffsmöglichkeit durch den Fahrer, zu steuern. Insbesondere kann die gesamte Längs- und Querführung des Kraftfahrzeugs vollständig autonom, ohne Eingriffsmöglichkeit durch den Fahrer, erfolgen.

Daneben kann das Fahrerassistenzsystem im zweiten Betriebsmodus insbesondere solche Fahrzeugsysteme steuern, für die keine direkte Bedienmöglichkeit durch den Fahrer vorgesehen ist, oder die im Fahrbetrieb typischerweise nicht durch Fahrer verändert werden. So können Einzelradbremsen angesteuert werden, eine Hinterradlenkung kann insbesondere separat von der Vorderradlenkung gesteuert werden und es können weitere Fahrzeugeinstellungen wie Parameter des Differenzials, des Fahrwerks oder Ähnliches verändert werden.

Das Fahrerassistenzsystem kann dazu ausgebildet sein, in dem Fall, wenn keine unter der Randbedingung fahrbare Trajektorie oder Trajektorienschar berechnet werden kann, die Randbedingung oder wenigstens eine der Randbedingungen anzupassen und wenigstens eine unter der angepassten Randbedingung fahrbare Trajektorie und/oder Trajektorienschar zu berechnen. Insbesondere ist es dabei möglich, dass direkt eine Steuertrajektorie bestimmt wird, entlang der das Kraftfahrzeug im zweiten Betriebsmodus geführt wird.

Wie eingangs erwähnt wurde, ist es insbesondere beim plötzlichen Auftreten von unerwarteten Verkehrssituationen nicht immer möglich, eine mögliche Trajektorie im Fahrbereich unter den verwendeten Randbedingungen zu ermitteln. Eine Berechnung einer fahrbaren Trajektorie kann unter Umständen nicht erfolgen, weil bestimmte Randbedingungen nicht derart gewählt wurden, dass sie tatsächlichen physikalischen Grenzen entsprechen, sondern beispielsweise so, dass sie einen Komfortbereich eines Fahrers beschreiben. Daher ist es vorteilhaft, wenn das Fahrerassistenzsystem zum Anpassen wenigstens einer Randbedingung und zur Neuberechnung der fahrbaren Trajektorien ausgebildet ist.

Insbesondere ist es möglich, dass bei der Berechnung der fahrbaren Trajektorien ausschließlich der Bereich der Fahrbahn selbst, also der Bereich einer Straße, der für den Fahrzeugverkehr bestimmt ist, als Fahrbereich betrachtet wird und damit eine Randbedingung zur Bestimmung der fahrbaren Trajektorien bildet. Verlässt nun das Kraftfahrzeug, beispielsweise aufgrund einer plötzlichen Lenkbewegung des Fahrers oder einer unerwarteten Verkehrssituation, den Fahrbahnbereich, so muss das Kraftfahrzeug zur Rückkehr auf die Fahrbahn einen Bereich überqueren, der nicht der Fahrbahn zugehörig ist. Es ist vorteilhaft, wenn in diesem Fall der Fahrbereich derart angepasst wird, dass der Bereich zwischen Kraftfahrzeug und Fahrbahn, soweit er frei von Hindernissen ist, dem Fahrbereich hinzugefügt wird. Auch in Fällen, in denen Kollisionen mit weiteren Kraftfahrzeugen vermieden werden sollen, kann es vorteilhaft sein, Bereiche neben der Straße zum Fahrbereich hinzuzufügen.

Es ist jedoch auch möglich, andere Randbedingungen zu variieren. Beispielsweise können in einigen Ausführungsformen des erfindungsgemäßen Kraftfahrzeugs bei der Berechnung der fahrbaren Trajektorien die Randbedingungen derart festgelegt sein, dass zunächst nur fahrbare Trajektorien in einem Komfortbereich des Fahrers ermittelt werden. In diesem Fall ist es möglich, dass zunächst die Bedingungen an die tatsächlichen physikalischen Randbedingungen angepasst werden und die fahrbaren Trajektorien neu berechnet werden. Ergänzend oder alternativ ist es auch möglich, dass Sicherheitsabstände oder Sicherheitsintervalle für bestimmte Parameter reduziert werden. Zudem können beispielsweise einige Fahrzeugsysteme wie Bremsen, Motor oder Ähnliches einen Arbeitsbereich aufweisen, in dem eine Beschädigung der Komponente möglich ist. Typischerweise werden die Randbedingungen bei der Berechnung der fahrbaren Trajektorien in diesem Fall zunächst so gewählt werden, dass dieser Betriebsbereich gemieden wird.

Zudem ist es möglich, dass das Fahrerassistenzsystem dazu ausgebildet ist, in dem Fall, wenn keine unter der, insbesondere angepassten, Randbedingung fahrbare Trajektorie oder Trajektorienschar berechnet werden kann, eine Notfalltrajektorie zu bestimmen. Damit kann, wenn keine physikalisch fahrbare Trajektorie existiert, die eine Kollision mit einem Hindernis vermeidet, die Steuertrajektorie derart bestimmt werden, dass insbesondere Personenschäden vermieden werden können und Schäden an dem eigenen Kraftfahrzeug, weiteren Kraftfahrzeugen oder Drittgegenständen weitest möglich reduziert werden. Das grundsätzliche Vorgehen zum Berechnen einer solchen Trajektorie ist dem Fachmann bekannt und wird daher nicht näher erläutert.

Weiterhin ist es möglich, dass die Auslösebedingung oder wenigstens eine der Auslösebedingungen und/oder die Randbedingung oder eine der Randbedingungen zur Berechnung der fahrbaren Trajektorien und/oder Trajektorienscharen und/oder die Auswahl, entlang welcher der Trajektorien oder Schartrajektorien die Führung des Kraftfahrzeugs erfolgt, von einer vorgegebenen oder durch das Fahrerassistenzsystem ermittelten Eigenschaft des Fahrers abhängig ist.

Die Fahrereigenschaft kann beispielsweise durch ein Bedienelement eingegeben werden, wobei ein Fahrer insbesondere zwischen einzelnen diskreten Möglichkeiten, wie beispielsweise einem gewünschten sportlichen oder komfortablen Fahrverhalten wählen kann, oder es ist möglich, dass der Fahrer sein Fahrverhalten auf einer kontinuierlichen oder vielstufigen Skala eingeben kann. Alternativ oder ergänzend kann die Eigenschaft des Fahrers auch durch Auswertung der durch den Fahrer befahrenen Trajektorien ermittelt und/oder angepasst werden.

Zudem können im Kraftfahrzeug Mittel zur Überwachung eines Fahrerzustandes, also insbesondere Mittel, die eine Müdigkeit oder Abgelenktheit des Fahrers ermittelt, vorgesehen sein und der Fahrerzustand kann die ermittelte Fahrereigenschaft sein oder diese beeinflussen. Verfahren zur Ermittlung einer Müdigkeit oder Abgelenktheit des Fahrers sind im Stand der Technik bekannt und sollen daher nicht näher erläutert werden.

Eine Anpassung der Auslösebedingung kann insbesondere durch Anpassen des vorgegebenen Grenzwerts erfolgen. Es ist jedoch auch möglich, dass die Bestimmung des Maßes für die Menge der Fahrmöglichkeiten eines Fahrers in Abhängigkeit einer Eigenschaft des Fahrers angepasst wird.

Des Weiteren betrifft die Erfindung ein Verfahren zur Steuerung eines Kraftfahrzeugs, umfassend ein Fahrerassistenzsystem, umfassend die Schritte:
- Erfassen von das Kraftfahrzeug betreffenden Egodaten und das Kraftfahrzeugumfeld betreffenden Umfelddaten,
- Vorausberechnen von unter wenigstens einer Randbedingung fahrbaren Trajektorien und/oder Trajektorienscharen durch Auswertung von das Kraftfahrzeug betreffenden Egodaten und das Kraftfahrzeugumfeld betreffenden Umfelddaten durch das Fahrerassistenzsystem,
- Bestimmen eines Fahrmöglichkeitswertes aus den berechneten Trajektorien und/oder Trajektorienscharen, der ein Maß für die Menge der Fahrmöglichkeiten eines Fahrers ist, durch das Fahrerassistenzsystem,
- Überprüfen, ob der Fahrmöglichkeitswert einen vorgegebenen Grenzwertes unterschreitet durch das Fahrerassistenzsystem, und
- Ansteuerung einer Hinweiseinrichtung zur Gabe eines Hinweises an einen Fahrer und/oder einen Dritten und/oder Eingriff in die Fahrzeugführung durch das Fahrerassistenzsystem, falls der Fahrmöglichkeitswert den Grenzwert unterschreitet.

Das Verfahren kann selbstverständlich gleichartig weitergebildet werden wie das beschriebene Kraftfahrzeug.

Weitere Vorteile und Einzelheiten der Erfindung ergeben sich aus den Ausführungsbeispielen sowie den zugehörigen Zeichnungen. Dabei zeigen:
- Fig. 1: schematisch ein Ausführungsbeispiel eines erfindungsgemäßen Kraftfahrzeugs,
- Fig. 2: eine Verkehrssituation,
- Fig. 3: eine weitere Verkehrssituation, und
- Fig. 4: ein Ablaufdiagramm eines Ausführungsbeispiels des erfindungsgemäßen Verfahrens.

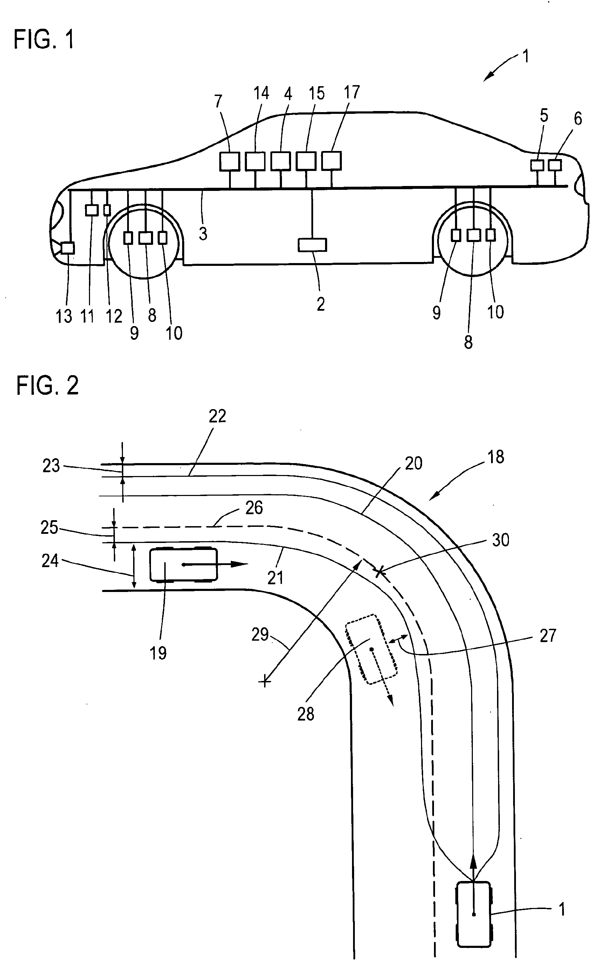

Fig. 1 zeigt ein Kraftfahrzeug 1 mit einem Fahrerassistenzsystem 2, das bei Erfüllung einer Auslösebedingung zur Ansteuerung einer Hinweiseinrichtung 15 zur Gabe eines Hinweises an einen Fahrer und/oder einer Kommunikationseinrichtung 6 zur Gabe eines Hinweises an weitere Kraftfahrzeuge und/oder zum Eingriff in die Fahrzeugführung ausgebildet ist. Die Auslösebedingung vergleicht einen Fahrmöglichkeitswert, der ein Maß für die Menge der Fahrmöglichkeiten eines Fahrers ist; mit einem vorgegebenen Grenzwert. Bei Unterschreiten dieses vorgegebenen Grenzwertes kann das Fahrerassistenzsystem 2 in einen zweiten Betriebsmodus wechseln, in dem das Kraftfahrzeug 1 entlang einer zuvor berechneten Trajektorie geführt wird. Die Führung entlang dieser Trajektorie kann insbesondere ohne Eingriffsmöglichkeit durch den Fahrer und autonom erfolgen. Dabei kann das Fahrerassistenzsystem 2 die gesamte Längs- und Querführung des Kraftfahrzeugs übernehmen. Ergänzend oder alternativ kann es die Hinweiseinrichtung 15 oder die Kommunikationseinrichtung 6 zur Ausgabe von Hinweisen an einen Fahrer und/oder Dritte ansteuern.

Das Kraftfahrzeug 1 ist mit einem Drive-by-Wire-System ausgestattet, so dass im normalen Fahrbetrieb Lenkbewegungen eines Fahrers durch einen Lenkwinkelsensor 7 erfasst werden und die Lenkbewegungen, unter Umständen nach einer Weiterverarbeitung durch ein nicht gezeigtes Steuersystem, über einen CAN-Bus 3 an die Lenkung 8 übertragen werden. Ebenso können auch Betätigungen eines nicht gezeigten Bremspedals, Gaspedals und eines Bedienelements der Schaltung an die entsprechenden Einrichtungen des Kraftfahrzeugs 1 übertragen werden. Im normalen Fahrbetrieb erfolgt die Führung des Kraftfahrzeugs 1 primär durch den Fahrer. So kann der Fahrer entweder das Kraftfahrzeug 1 vollständig führen oder der Fahrer kann bei der Führung des Kraftfahrzeugs 1 durch Fahrerassistenzsysteme wie beispielsweise eine automatische Abstandsregelung oder einen Spurassistenten unterstützt werden. Wesentlich ist, dass in einem ersten Betriebsmodus des Fahrerassistenzsystems 2, der einen üblichen Fahrbetrieb darstellt, der Fahrer stets die vollständige Kontrolle über das Fahrzeug hat, das heißt, unterstützende Fahrerassistenzsysteme jederzeit übersteuern kann.

Im Kraftfahrzeug 1 ist zudem ein Bedienelement 14 zur Eingabe von Fahrereigenschaftsdaten vorgesehen. Die Fahrereigenschaftsdaten können auch im laufenden Betrieb des Kraftfahrzeugs angepasst werden, indem das Fahrerassistenzsystem 2 die vom Fahrer tatsächlich gefahrenen Trajektorien auswertet. Zudem umfasst das Kraftfahrzeug 1 ein Fahrerzustandserfassungsmittel 17, das als Kamera mit zugeordneter Bildverarbeitungseinrichtung ausgebildet ist. Damit können der Lidschlag und die Pupillenbewegung des Fahrers ausgewertet werden, um Müdigkeit oder ein Abgelenktsein des Fahrers zu ermitteln. Ergänzend werden die Bewegungen des Lenkrads 7 ausgewertet, um die Daten des Fahrerzustandserfassungsmittels 17 zu ergänzen. Abhängig vom erfassten Fahrerzustand und der angegebenen oder ermittelten Fahrereigenschaft können die Auslösebedingungen, die Randbedingungen bei der Ermittlung von fahrbaren Trajektorien bzw. Trajektorienscharen und/oder die Auswahl der Steuertrajektorie, entlang der das Kraftfahrzeug im zweiten Betriebsmodus geführt wird, angepasst werden.

Während des Betriebs des Kraftfahrzeugs 1 kann das Fahrerassistenzsystem 2 über den CAN-Bus 3 stets Informationen über eine Vielzahl von Fahrzeugsystemen abfragen, um Ego- bzw. Umfelddaten zu ermitteln. Das Fahrerassistenzsystem 2 kann Daten eines Navigationssystems 4 nutzen, um eine geplante Route des Kraftfahrzeugs 1 zu ermitteln und weitere Informationen über den Straßenverlauf, beispielsweise eine Neigung oder eine Steigung der Straße, Kurvenradien oder örtliche Verkehrsregeln abzufragen. Die aus dem Navigationssystem 4 gewonnenen Daten können zudem durch Daten eines Umfeldsensors 13, der als Kamera ausgeführt ist, ergänzt werden. Im Kraftfahrzeug ist zudem eine Positionsbestimmungseinrichtung 5 zur Bestimmung der Fahrzeugposition, die als GPS-Sensor ausgebildet ist, vorgesehen.

Über eine Kommunikationseinrichtung 6 kann das Fahrerassistenzsystem 2 zudem weitere Umfeldinformationen gewinnen, indem es mit weiteren Kraftfahrzeugen über eine Car-2-Car-Kommunikation oder mit Infrastruktureinrichtungen und/oder anderen Kraftfahrzeugen durch eine Car-2-X-Kommunikation kommuniziert. Damit können direkt Informationen über das Fahrverhalten weiterer Kraftfahrzeuge gewonnen und bei der Berechnung des Umfeldmodells genutzt werden. Über die Kommunikationseinrichtung 6 kann auch eine drahtlose Kommunikation mit Datenbanken, insbesondere Internetdatenbanken, erfolgen, um das Umfeldmodell zu ergänzen.

Das Fahrerassistenzsystem 2 ist zudem dazu ausgebildet, eine Vielzahl von Sensoren auszulesen, die Parameter des Kraftfahrzeugs 1 messen. So können die Stellung eines automatischen Getriebes 12 und die Parameter einer Motorsteuerung 11 ausgelesen werden. Aus den Daten eines Lenkwinkelsensors 7 sowie an einer Lenkung 8 angeordneten Sensoren kann ein Lenkwinkel des Kraftfahrzeugs 1 bestimmt werden. Weitere Sensoren sind Sensoren am Bremssystem 10 und Rotationssensoren 9 an den Rädern.

Das Fahrerassistenzsystem 2 ist ausgebildet, aus den zahlreichen Egodaten des Kraftfahrzeugs 1 und den zahlreichen ermittelten Umfelddaten ein Dynamikmodell für das eigene Kraftfahrzeug 1 sowie ein detailliertes Umfeldmodell zu errechnen, wobei die Bewegung weiterer Kraftfahrzeuge durch ein jeweils entsprechendes Dynamikmodell prognostiziert wird. Zur Ermittlung der zukünftigen Fahrsituationen berechnet das Fahrerassistenzsystem 2 mehrere fahrbare Trajektorien für das Kraftfahrzeug 1. Bei der Berechnung der fahrbaren Trajektorien werden mehrere Randbedingungen berücksichtigt, die die Fahrbarkeit der Trajektorie sicherstellen, beispielsweise maximale Längs- und Querbeschleunigungen, und die die Fahrereigenschaften berücksichtigen. Die Berücksichtigung der Fahrereigenschaften erfolgt derart, dass abhängig von der Fahrereigenschaft die Randbedingungen, die eine Fahrbarkeit der Trajektorie sicherstellen, weiter eingeschränkt werden. Hierfür sind im Fahrerassistenzsystem 2 Wertetabellen vorgesehen, aus denen abhängig von den Fahrereigenschaftsdaten für zumindest einige der Randbedingungen entweder absolute Maximal- oder Minimalwerte oder Relativwerte angegeben sind, die einen Bruchteil eines physikalisch möglichen Grenzwerts angeben, der als Randbedingung genutzt wird. Die zeitliche oder örtliche Länge der Trajektorien wird in Abhängigkeit der Verkehrsdichte und/oder Fahrzeuggeschwindigkeit angepasst.

Die Trajektorien können auf vielfältige Weise bestimmt werden. So kann zunächst ein Fahrbereich für das Kraftfahrzeug 1 ermittelt werden, in dem ein Fahrbetrieb des Kraftfahrzeugs 1 möglich ist. In diesem Bereich werden zunächst ohne Berücksichtigung der Fahrzeuggeschwindigkeit Trajektorien bestimmt, die durch das Kraftfahrzeug 1 befahrbar sind und anschließend werden Geschwindigkeitsprofile für diese Trajektorien ermittelt. Alternativ ist es hier auch möglich, die Trajektorien unmittelbar so zu berechnen, dass sie sowohl Orts- als auch Geschwindigkeitsdaten, sowie unter Umständen weitere Parameter umfassen. Alternativ oder ergänzend können auch fahrbare Trajektorienscharen bestimmt werden. In diesem Fall können in einem befahrbaren Bereich zunächst ohne Berücksichtigung der Fahrzeuggeschwindigkeit eine oder mehrere befahrbare Trajektorienscharen bestimmt werden. Anschließend werden den Trajektorienscharen Geschwindigkeitsprofile zugeordnet. Dabei ist es möglich, dass die Geschwindigkeitsprofile ebenfalls über jene Parameter parametrisiert sind, die die Trajektorienschar parametrisieren, alternativ können jedoch auch für beabstandete Werte der Parameter, durch die die Trajektorienschar parametrisiert ist, jeweils einzelne Geschwindigkeitsprofile bestimmt werden. Als weitere Alternative ist es auch bei der Bestimmung von Trajektorienscharen möglich, die Trajektorienscharen unmittelbar so zu berechnen, dass diese neben Ortsdaten auch Geschwindigkeitsdaten und/oder weitere Parameter, wie beispielsweise den Schwimmwinkel des Kraftfahrzeugs, also den Winkel zwischen der Bewegungsrichtung des Kraftfahrzeugs und der Ausrichtung des Kraftfahrzeugs, umfassen.

Das Fahrerassistenzsystem 2 ist ausgebildet, aus den so gebildeten Trajektorien bzw. Trajektorienscharen einen Fahrmöglichkeitswert zu bestimmen, der ein Maß für die Menge der Fahrmöglichkeiten eines Fahrers ist. Das Maß für die Menge der Fahrmöglichkeiten kann die Anzahl der berechneten Trajektorien oder die Breite eines Wertebereichs eines Parameters, der eine berechnete Trajektorienschar parametrisiert, sein. Dabei kann entweder der Wertebereich eines einzelnen Parameters berücksichtigt werden oder die Wertebereiche mehrerer Parameter. Wird ein einzelner Parameter berücksichtigt, kann die Breite des Wertebereiches einer bestimmten Position zu einem bestimmten Zeitpunkt berücksichtigt werden oder es kann ein Maximalwert, Mittelwert oder Median für die Breite des Wertebereichs berücksichtigt werden. Zur Berechnung von Mittelwerten kann insbesondere die Breite des Wertebereichs entlang der Trajektorie integriert werden. Das Fahrerassistenzsystem kann auch die Breite von Wertebereichen mehrerer Parameter auswerten. Hierbei werden die Breiten der Wertebereiche multipliziert oder es wird alternativ eine gewichtete Summe der Breiten der Wertebereiche der einzelnen Parameter berechnet. Damit kann ein Fahrmöglichkeitswert für eine einzelne Trajektorienschar berechnet werden.

Auch wenn mehrere fahrbare Trajektorienscharen ermittelt wurden, kann ein Fahrmöglichkeitswert nur aus einer der Trajektorienscharen bestimmt werden, insbesondere aus der Trajektorienschar mit dem höchsten für die einzelne Trajektorie bestimmten Fahrmöglichkeitswert. Alternativ ist es jedoch auch möglich, mehrere oder alle Trajektorienscharen zu berücksichtigen, indem die Fahrmöglichkeitswerte der einzelnen Trajektorienscharen zu einem Gesamtfahrmöglichkeitswert aufsummiert werden.

Wird ein vorgegebener Grenzwert durch den Fahrmöglichkeitswert unterschritten und wurde zumindest eine fahrbare Trajektorie ermittelt, so wechselt das Fahrerassistenzsystem 2 in den zweiten Betriebsmodus. Im zweiten Betriebsmodus erfolgt die Steuerung der Lenkung 8 des Bremssystems 10, des Motors 11 sowie des automatischen Getriebes 12 autonom durch das Fahrerassistenzsystem 2, derart, dass das Kraftfahrzeug 1 entlang einer Steuertrajektorie bewegt wird, die durch die Steuereinrichtung 2 aus den fahrbaren Trajektorien bzw. den Schartrajektorien der fahrbaren Trajektorienscharen gewählt wird.

Wird ermittelt, dass keine fahrbare Trajektorie unter den zuvor bestimmten Randbedingungen ermittelt werden kann, so ist das Fahrassistenzsystem 2 dazu ausgebildet, die Randbedingungen anzupassen, wobei der Einfluss der Fahrereigenschaftsdaten auf einige der Randbedingungen verringert wird, indem die fahrereigenschaftsdatenabhängigen Randbedingungen entweder nicht berücksichtigt werden, oder zwischen den fahrereigenschaftsabhängigen und fahrereigenschaftsunabhängigen Randbedingungen, die die physikalische Fahrbarkeit der Trajektorie sicherstellen, interpoliert wird.

Ist eine solche Anpassung der Randbedingungen zur Bestimmung einer Fahrbahntrajektorie notwendig, so gilt dies als Erfüllung der Auslösebedingung und das Fahrerassistenzsystem 2 wechselt in den zweiten Betriebsmodus, wobei die Führung des Kraftfahrzeugs entlang einer der mit den angepassten Randbedingungen berechneten fahrbaren Trajektorie erfolgt. Alternativ wäre es auch möglich, dass ein Wechsel in den zweiten Betriebsmodus erst nach mehrmaliger Anpassung der Randbedingungen erfolgt.

Das Fahrerassistenzsystem 2 ist zudem dazu ausgebildet, in dem Fall, in dem auch bei vollständiger Nichtberücksichtigung der Fahreigenschaftsdaten keine fahrbare Trajektorie berechnet werden kann, eine Notfalltrajektorie zu berechnen und das Kraftfahrzeug 1 autonom entlang der Notfalltrajektorie zu führen. Kann keine physikalisch fahrbare Trajektorie berechnet werden, so ist davon auszugehen, dass eine kontrollierte Fortsetzung des Fahrbetriebs nicht möglich ist. In diesem Fall kann eine Trajektorie berechnet werden, die das Kraftfahrzeug zum Stillstand bringt, wobei Schäden an Personen, dem Kraftfahrzeug und Drittgegenständen minimiert werden.

Im zweiten Betriebsmodus überprüft das Fahrerassistenzsystem 2 in regelmäßigen Abständen, ob eine Rückschaltbedingung vorliegt. Die Rückschaltbedingung für einen Rückwechsel in den ersten Betriebsmodus ist, dass die Auslösebedingung nicht vorliegt und dass die Verkehrssituation sowie die Straßenführung an der Position des Kraftfahrzeugs 1 eine sichere Rückübergabe der Fahrzeugkontrolle an den Fahrer erlauben. Dabei werden die Abstände zu weiteren Verkehrsteilnehmern und anderen Hindernissen und eine voraussichtliche Zeit bis zum nächsten notwendigen Lenkeingriff ausgewertet.

Fig. 2 zeigt eine Verkehrssituation, in der sich das Kraftfahrzeug 1 auf eine Kurve 18 zubewegt. Auf der zweiten Fahrspur kommt ihm ein Kraftfahrzeug 19 entgegen. Zur Bestimmung des Umfeldmodells werden zunächst Umfelddaten, die die Fahrbahn betreffen, berücksichtigt. Eine Fahrbahn kann durch einen lokalen Krümmungsradius 29 der Fahrbahn, eine Fahrbahnneigung und eine lokale Fahrbahnsteigung beschrieben werden. Ausgehend von diesen Daten und den Egodaten des Kraftfahrzeugs 1, sowie einem Dynamikmodell, das das entgegenkommende Kraftfahrzeug 19 beschreibt, können mögliche Trajektorien auf vielfältige Weise berechnet werden. Im Folgenden soll als einfaches Beispiel eine Berechnung der Trajektorien genutzt werden, bei der Trajektorien zunächst als reine Ortskurven bestimmt werden, für die in einem separaten Schritt zumindest ein mögliches Geschwindigkeitsprofil bestimmt wird. Selbstverständlich ist es alternativ möglich, exaktere Verfahren zur Trajektorienberechnung zu nutzen, die beispielsweise den Roll- und Nickwinkel des Kraftfahrzeugs berücksichtigen oder auch eine Driftbewegung des Kraftfahrzeugs, also eine Bewegung mit hohem Schwimmwinkel, berechnen können.

Zur rein geometrischen Berechnung von Trajektorien werden zunächst die Grenztrajektorien 21 und 22 berechnet, die den durch das Kraftfahrzeug 1 befahrbaren Fahrschlauch begrenzen. Die Grenztrajektorien 21, 22 sind zum einen durch den maximalen Lenkwinkel des Kraftfahrzeugs 1 und zum anderen durch den Fahrbereich bestimmt. Die Bestimmung des Fahrbereichs ist abhängig von den Fahrereigenschaftsdaten. Diese beeinflussen den Abstand 23, 24 von den Rändern der Fahrbahn, ob und wie weit die Trajektorie des Kraftfahrzeugs eine Gegenfahrbahn mitnutzen kann, was durch den Doppelpfeil 25 angedeutet ist, und welcher Mindestabstand 27 von Hindernissen gehalten werden muss. Unter der Annahme, dass Kraftfahrzeug 1 vor dem Passieren des Scheitelpunkts 30 der Kurve 18 nicht beschleunigt, wird aus dem Dynamikmodell für Kraftfahrzeug 19 vorausberechnet, dass sich das Kraftfahrzeug 19 zu dem Zeitpunkt, zu dem das Kraftfahrzeug 1 das Kraftfahrzeug 19 passiert, die Position 28 erreicht oder bereits passiert hat. Die linke Randtrajektorie 21 muss daher einen Mindestabstand 27 zu dieser prognostizierten Position halten. Ergänzend ist in Fig. 2 eine Idealtrajektorie 20 für das Kraftfahrzeug 1 gezeigt, die unter der zusätzlichen Randbedingung bestimmt ist, dass kein Teil des Kraftfahrzeugs 1 in die Gegenfahrspur eindringt.

Die Idealtrajektorie 20 wurde mit einem A*-Verfahren berechnet. Die geometrisch möglichen Trajektorien können bestimmt werde, indem eine Vielzahl von Zwischentrajektorien zwischen der Idealtrajektorie 20 und den Begrenzungstrajektorien 21, 22 bestimmt wird. Hierbei können die Lenkwinkel im Bereich der Ist-Position des Kraftfahrzeugs variiert werden, um so einen kontinuierlichen Übergang zwischen den verschiedenen Trajektorien zu erhalten. Die zwischen den Trajektorien 20, 21, 22 liegenden Trajektorien können jedoch auf vielfältige andere Arten ermittelt werden, wobei jedoch insbesondere nur solche Trajektorien ermittelt werden, die maximal eine vorgegebene Zahl von Wendepunkten aufweisen.

Ergänzend sei angemerkt, dass es auch möglich ist, ausschließlich die Trajektorien 21, 22 vorzuberechnen und den Raum zwischen diesen Trajektorien anschließend durch eine Interpolation zwischen diesen Trajektorien zu füllen. Die geometrischen Trajektorien können entweder als einzelne Trajektorien bestimmt werden, indem Trajektorien mit einem vorgegebenen Abstand, beispielsweise von einigen cm berechnet werden. Es ist jedoch auch möglich, die Trajektorien als eine oder mehrere Trajektorienscharen zu berechnen, die über wenigstens einen Parameter parametrisiert sind. Beispielsweise können Trajektorien über eine Stärke der Krümmung und eine Länge des gekrümmten Bereichs definiert werden. Werden bei einer solchen Beschreibung der Trajektorien Wertebereiche für die Parameter vorgegeben, so ist es möglich, eine Vielzahl von Trajektorien sehr kompakt darzustellen.

Den einzelnen berechneten Trajektorien kann jeweils ein Geschwindigkeitsprofil zugewiesen werden. Sind die Trajektorien als Trajektorienschar definiert, ist es auch möglich, das Geschwindigkeitsprofil ebenso zu parametrisieren. Das Geschwindigkeitsprofil beschreibt einen Verlauf der Geschwindigkeiten des Kraftfahrzeugs 1 bei einer Bewegung entlang der Trajektorie, wobei eine Bewegung entlang der Trajektorien mit diesen Geschwindigkeiten eine oder mehrere Grenzbedingungen erfüllt. Eine entscheidende Grenzbedingung ist hierbei, dass die auf das Kraftfahrzeug 1 in der Kurve wirkende Zentrifugalkraft die Haftreibungskraft zwischen den Reifen 18 des Kraftfahrzeugs 1 und der Straße nicht übersteigt. Die Haftreibungskraft zwischen dem Kraftfahrzeug 1 und der Straße kann im einfachsten Fall aus der Fahrzeugmasse und einem Reibkoeffizienten zwischen Straße und Reifen bestimmt werden. Es ist jedoch auch möglich, beispielsweise Nick- und Rollwinkel des Kraftfahrzeugs 1 zu berücksichtigen, wodurch sich die Normalkräfte auf die einzelnen Reifen 18 des Kraftfahrzeugs 1 voneinander unterscheiden und damit unterschiedliche Reibkräfte für jeden der Reifen 18 des Kraftfahrzeugs 1 vorliegen.

Der Reibungskoeffizient für die Reifen ist abhängig vom Reifentyp für das Kraftfahrzeug festgelegt. Es ist auch möglich, diesen Reibungswert für die Reifen abhängig von der Fahrleistung des Reifens anzupassen oder dynamisch in bestimmten Fahrsituationen zu ermitteln. Ein Reibungswert für die Fahrbahn kann als fester Wert abgeschätzt werden. Es ist jedoch vorteilhaft, diesen Wert abhängig von Informationen beispielsweise eines Navigationssystems und einem oder mehrerer Fahrzeugsensoren anzupassen. Durch eine Kamera oder die Daten eines Navigationssystems wird die Art des Straßenbelags bestimmt. Aus der Art des Straßenbelags kann eine gute Voraussage für den Reibwert ermittelt werden. Zudem können durch eine Kamera beziehungsweise eine Bildauswertung Verunreinigungen der Straße erkannt werden und der lokale Reibungskoeffizient dementsprechend angepasst werden. Zudem können Witterungsbedingungen, insbesondere die Temperatur und die Feuchtigkeit, berücksichtigt werden.

Durch einen Vergleich der Reibungskraft zwischen dem Kraftfahrzeug 1 und der Straße beziehungsweise den einzelnen Reifen 18 und der Straße mit den auftretenden Zentrifugalkräften für die Trajektorien können Grenzgeschwindigkeiten bestimmt werden, für die die Reibkraft und die Zentrifugalkraft gleich sind. Vorteilhaft können jedoch auch zusätzliche Beschleunigungen durch ein Beschleunigen oder Bremsen des Kraftfahrzeugs bei diesem Vergleich mit berücksichtigt werden. Der Betrag der Vektorsumme von Längs- und Querbeschleunigung des Kraftfahrzeugs multipliziert mit dessen Masse darf dabei die Reibkraft nicht übersteigen. Dies entspricht dem Prinzip des Kammschen Kreises. Typischerweise wird ein Höchstgeschwindigkeitsprofil für eine Trajektorie bestimmt, wobei bei der Bestimmung des Höchstgeschwindigkeitsprofils insbesondere Sicherheitsabstände zwischen den entlang der Trajektorie auf das Kraftfahrzeug wirkenden Beschleunigungskräften und der Reibkraft vorgesehen werden können. Die Sicherheitsabstände werden dabei in Abhängigkeit der Fahrereigenschaftsdaten bestimmt. Ergänzend oder alternativ ist auch möglich, fahrereigenschaftsabhängige Maximalwerte für die Beschleunigungen vorzugeben.

Als Ergebnis liegen im Fahrerassistenzsystem die fahrbaren Trajektorien vor, die jeweils eine Ortskurve und ein der Ortskurve zugeordnetes Geschwindigkeitsprofil aufweisen. Anhand dieser Trajektorien kann ein Fahrmöglichkeitswert bestimmt werden, der angibt, wie viele in ihren Parametern beabstandete Trajektorien, also insbesondere nebeneinander verlaufende Trajektorien im Ortsraum, befahren werden können. Unterschreitet dieser Fahrmöglichkeitswert einen vorgegebenen Grenzwert, so ist die Auslösebedingung erfüllt und das Fahrerassistenzsystem kann eine Hinweiseinrichtung ansteuern oder in die Fahrzeugführung eingreifen, insbesondere indem es in den zweiten Betriebsmodus wechselt, in dem das Kraftfahrzeug autonom geführt wird.

Selbstverständlich können für die Trajektorien zunächst auch Geschwindigkeitsprofile berechnet werden, die die maximal möglichen Geschwindigkeiten in jedem Punkt angeben, ohne die momentane Ist-Geschwindigkeit des Kraftfahrzeugs 1 zu berücksichtigen. Anschließend können die Anfangsgeschwindigkeiten der Trajektorien mit der Ist-Geschwindigkeit des Kraftfahrzeugs verglichen werden und bei Überschreiten der Anfangsgeschwindigkeit durch die Ist-Geschwindigkeit des Kraftfahrzeugs 1 können die entsprechenden Trajektorien verworfen, das heißt im weiteren Verfahren nicht mehr berücksichtigt werden. Unterschreitet der aus der Anzahl der verbleibenden Trajektorien bestimmte Fahrmöglichkeitswert nun den vorgegebenen Grenzwert, so ist die Auslösebedingung erfüllt und eine Hinweiseinrichtung zur Gabe eines Hinweises an den Fahrer oder einen Dritten kann angesteuert werden oder das Fahrerassistenzsystem kann in die Fahrzeugführung eingreifen.

Das Erfüllen der Auslösebedingung und die Wahl der Steuertrajektorie soll im Folgenden dargestellt werden. Bewegt sich das Kraftfahrzeug 1 mit niedriger Geschwindigkeit, so sind alle Trajektorien zwischen den Begrenzungstrajektorien 21 und 22 fahrbar. Die geometrische Form der berechneten Trajektorien ist nur durch die Vorgabe einer maximalen Wendepunktzahl beschränkt. Die Auslösebedingung ist die Breite der Trajektorienschar am Scheitelpunkt 30 der Kurve 18, also bei niedrigen Geschwindigkeiten der Abstand zwischen den Begrenzungstrajektorien 21 und 22 senkrecht zur Fahrtrichtung.

Bei höheren Geschwindigkeiten des Kraftfahrzeugs 1 werden einige der bei niedrigen Geschwindigkeiten fahrbaren Trajektorien nicht mehr fahrbar. So ergeben sich aus der Anfangsgeschwindigkeit der jeweiligen Trajektorie minimale Seitenbeschleunigungen, die von einem lokalen Krümmungsradius 29 der jeweiligen Trajektorie abhängen. Aufgrund eines vorgegeben Maximalwerts für die Querbeschleunigung können diese Trajektorien nicht mehr berechnet werden oder werden nach der Berechnung verworfen. Bei zunehmender Geschwindigkeit sind bei Erreichen einer Grenzgeschwindigkeit nur noch eine oder mehrere diskrete Idealtrajektorien unter Einhaltung der vorgegebenen Randbedingungen fahrbar. Mit zunehmender Geschwindigkeit verengt sich also die geometrische Breite der Trajektorienschar, bis nur noch die Idealtrajektorie 20 fahrbar ist. Unterschreitet die Breite der Trajektorienschar einen vorgegebenen Grenzwert, so wechselt das Fahrerassistenzsystem in den zweiten Betriebsmodus und führt das Kraftfahrzeug 1 autonom entlang der Idealtrajektorie 20.

Nach dem Durchqueren der Kurve 26 ist wieder eine breite Trajektorienschar fahrbar. Damit kann das Fahrerassistenzsystem abhängig von der Verkehrssituation und der Streckenführung in den ersten Betriebsmodus wechseln.

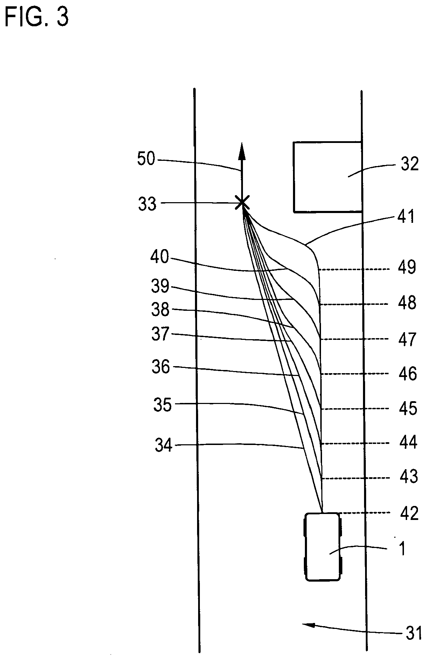

Fig. 3 zeigt eine weitere Verkehrssituation, in der sich das Kraftfahrzeug 1 auf der Fahrbahn 31 bewegt, wobei die Fahrbahn 31 vor dem Kraftfahrzeug 1 durch ein Hindernis 32 teilweise blockiert ist. Das Fahrerassistenzsystem des Kraftfahrzeugs 1 erfasst kontinuierlich Ego- und Umfelddaten und ermittelt, dass das Kraftfahrzeug 1 auf Fahrbahn 31 um das Hindernis 32 herumgeführt werden soll. Das Fahrerassistenzsystem 2 des Kraftfahrzeugs 1 ermittelt ständig fahrbare Trajektorien für das Kraftfahrzeug unter wenigstens einer Randbedingung. Beispielhaft sind hier ausschließlich die Trajektorien 34 bis 41 gezeigt, die zu einem Zielpunkt 33 führen und die zu einer Ausrichtung des Kraftfahrzeugs in die durch Pfeil 50 angedeutete Richtung führen. Weitere Randbedingungen für die Trajektorien 34 bis 41 sind, dass die Trajektorien 34 bis 41 nur jeweils einen Wendepunkt aufweisen und, dass unter Berücksichtigung der Position 42 bis 49, zu der jeweils ein erster Lenkeingriff zur Führung des Kraftfahrzeugs 1 entlang einer der Trajektorien 34 bis 41 notwendig ist, die Radien der zu durchfahrenden Kurven maximiert und damit die seitlichen Beschleunigungskräfte auf Kraftfahrzeug 1 minimiert werden. Unter dieser Bedingung könnte daneben auch noch ein weiterer Trajektoriensatz berechnet werden, bei dem das Kraftfahrzeug ab Position 42 eine Kurve eines geringeren Radiuses als die der Trajektorie 34 fährt. Diese Trajektorien entsprechen im Wesentlichen einer Spiegelung der gezeigten Trajektorie an der Verbindungslinie zwischen dem Kraftfahrzeug 1 und dem Zielpunkt 33. Diese Trajektorien sind aus Übersichtsgründen nicht gezeigt.

Die Trajektorien 34 bis 41 können durch das Fahrerassistenzsystem 2 des Kraftfahrzeugs 1 in Form einer Trajektorienschar berücksichtigt werden, indem die Position 42 bis 49, an der Lenkeingriff erfolgt, als Parameter zur Parametrisierung der Trajektorienschar gewählt wird. Im Folgenden wird jedoch davon ausgegangen, dass das Fahrerassistenzsystem 2 des Kraftfahrzeugs 1 die Trajektorien 34 bis 41 als diskrete Trajektorien, die in dem Parameter der Position 42 bis 49 des Lenkeingriffs beabstandet sind, berechnet.

Die Trajektorie 34 ist die Trajektorie mit dem größten minimalen Krümmungsradius, die unter den gegebenen Randbedingungen für ein Kraftfahrzeug an Position 42 bestimmt werden kann. Damit ist die Trajektorie 34 auch die Trajektorie, bei der bei einer gegebenen Anfangsgeschwindigkeit die geringsten Zentrifugalkräfte auf das Kraftfahrzeug 1 wirken. Die Trajektorie 41 weist Krümmungsradien auf, die durch den maximalen Lenkwinkel des Kraftfahrzeugs 1 begrenzt sind. Die Krümmungsradien der Trajektorie 41 sind die kleinsten Krümmungsradien der gezeigten Trajektorien. Damit werden beim Durchfahren von Trajektorie 41 bei gleicher Geschwindigkeit stets die höchsten Zentrifugalkräfte auf das Kraftfahrzeug 1 wirken.

Bewegt sich das Kraftfahrzeug 1 in der gezeigten Verkehrssituation mit geringer Geschwindigkeit auf das Hindernis 32 zu, so sind zunächst alle Trajektorien 34 bis 41 durch das Kraftfahrzeug 1 unter den gegebenen Randbedingungen befahrbar. Mit der gezeigten Art der Berechnung sind damit zunächst acht Trajektorien durch das Kraftfahrzeug 1 fahrbar. In einer realen Fahrsituation werden typischerweise weit mehr Trajektorien berechnet, da mehrere Zielpunkte neben dem Zielpunkt 33 möglich sind, die durch Pfeil 50 angezeigte Zielrichtung nicht fest vorgegeben ist, die vorgenannten Trajektorien möglich sind, die an der Verbindungslinie zwischen Kraftfahrzeug 1 und Zielpunkt 33 gespiegelt sind und die Abstände zwischen den Trajektorien im jeweils gewählten Parameter zur Beabstandung typischerweise weit geringer gewählt sind. Die geringe Zahl der dargestellten Trajektorien wurde im Beispiel aus Übersichtlichkeitsgründen gewählt.

Bewegt sich das Kraftfahrzeug 1 nun im Beispiel weiterhin mit geringer Geschwindigkeit geradlinig weiter, so reduziert sich nach Überqueren von Position 42 die Anzahl der berechneten Trajektorien auf sieben, da Trajektorie 34 nicht mehr gefahren werden kann. Nach einem Überqueren der Position 43 reduziert sich die Anzahl der fahrbaren Trajektorien auf sechs, nach Überqueren der Position 44 auf fünf und so weiter. Sind nun im Fahrerassistenzsystem des Kraftfahrzeugs 1 zwei Grenzwerte gespeichert, wobei bei einer Unterschreiten eines Grenzwertes von fünf Trajektorien eine Hinweiseinrichtung zur Gabe eines Hinweises an einen Fahrer aktiviert wird und bei einer Unterschreitung von einem Grenzwert von drei ermittelten Trajektorien ein autonomer Lenkeingriff erfolgt, so würde im Kraftfahrzeug 1 nach Überqueren der Position 45 ein Hinweis an den Faher ausgegeben, dass ein Lenkeingriff seinerseits erforderlich ist, und falls dieser Lenkeingriff weiterhin nicht erfolgt, nach Überqueren der Position 47 ein autonomer Fahrbetrieb zum Zielpunkt 33, und abhängig von der Verkehrssituation und der Straßenführung auch darüber hinaus, eingeleitet.

Im vorgenannten Beispiel ist die Zahl der fahrbaren Trajektorien ausschließlich von der Position des Kraftfahrzeugs 1 und einem durch den Aufbau des Kraftfahrzeugs 1 begrenzten maximalen Lenkwinkel bestimmt. In einer Erweiterung des vorgenannten Beispiels ist es jedoch auch möglich, ein Geschwindigkeitsprofil für die Maximalgeschwindigkeit entlang jeder der Trajektorien 34 bis 41 zu berücksichtigen. Wie eingangs erläutert nehmen die minimalen Krümmungsradien, die während dem Durchfahren der Trajektorien durchfahren werden, von Trajektorie 41 zu Trajektorie 34 kontinuierlich ab. Die Zentrifugalkräfte, die auf das Kraftfahrzeug wirken, sind proportional zum Geschwindigkeitsquadrat und umgekehrt proportional zum lokalen Krümmungsradius. Dies bedeutet, dass Trajektorien mit großem minimalen Krümmungsradius wie Trajektorie 34 mit weit größerer Geschwindigkeit durchfahren werden können, als Trajektorien mit kleinem minimalen Krümmungsradius, wie beispielsweise Trajektorie 41. Dies bedeutet, dass ab einer gewissen ersten Ist-Geschwindigkeit des Kraftfahrzeugs 1 die Trajektorie 41 nicht mehr befahrbar ist, ab einer höheren zweiten Ist-Geschwindigkeit des Kraftfahrzeugs die Trajektorie 40 nicht mehr befahrbar ist und so weiter. Ist nun die Geschwindigkeit des Kraftfahrzeugs so hoch, dass beispielsweise Trajektorie 38 noch befahren werden kann, Trajektorie 39 jedoch bereits nicht mehr, so sind bereits an Position 42 nur noch fünf der Trajektorien 34 bis 41 für Kraftfahrzeug 1 befahrbar. Werden die gleichen Bedingungen wie oben für die Ausgabe einer Warnung und die Einleitung eines autonomen Fahrbetriebs angenommen, so wird bei Überqueren der Position 42 in Kraftfahrzeug 1 eine Hinweiseinrichtung angesteuert und bei Überqueren der Position 44 wird, falls der Fahrer nicht zuvor in den Fahrbetrieb eingegriffen hat, ein autonomer Fahrbetrieb eingeleitet.

Es ist leicht erkennbar, dass das entsprechende Verfahren auch derart erweitert werden kann, dass Beschleunigungen und Bremsvorgänge entlang der Trajektorien berücksichtigt werden, wobei es hierbei insbesondere möglich ist, dass in Abhängigkeit der Reibkraft zwischen Kraftfahrzeug 1 und Straße 31 eine maximale Gesamtbeschleunigung für jeden Punkt der Trajektorie vorgegeben wird, die sich aus einer Beschleunigung bzw. einer Verzögerung des Kraftfahrzeugs und einer Zentrifugalkraft aufgrund von Lenkbewegungen zusammensetzt. In diesem Fall wird also zur Bestimmung der Geschwindigkeitsprofile entlang der Trajektorien 34 bis 41 das Prinzip des Kammschen Kreises genutzt.

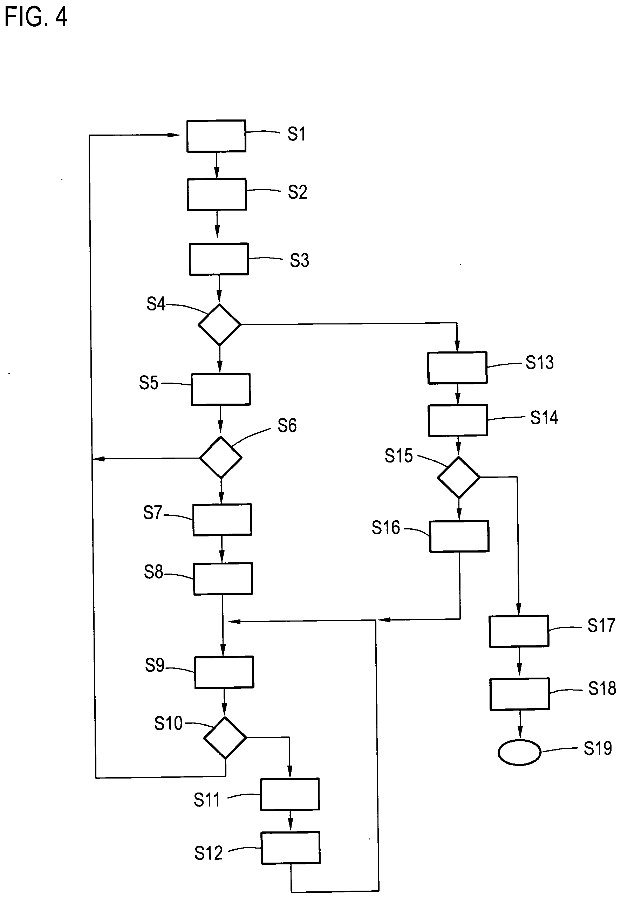

Fig. 4 zeigt ein Ablaufdiagramm eines Ausführungsbeispiels eines Verfahrens zur Führung eines Kraftfahrzeugs. In Schritt S1 werden eine Vielzahl von Ego- und Umfelddaten erfasst und dem Fahrerassistenzsystem zur Verfügung gestellt. Ego- und Umfelddaten können durch eine Vielzahl von Sensoren, Kommunikationseinrichtungen und Ähnliches erfasst und mithilfe einer ermittelten Fahrzeugposition aus lokalen Datenbanken oder Datenbanken, auf die drahtlos zugegriffen werden kann, ermittelt werden. Aus den ermittelten Ego- und Umfelddaten sowie aus einer ermittelten oder von einem Fahrer eingegebenen Fahrereigenschaft, die unter Umständen durch die Daten eines Fahrerzustandserfassungsmittels modifiziert ist, werden in Schritt S2 Randbedingungen für die Berechnung der fahrbaren Trajektorien bestimmt. Insbesondere kann aus den Umfelddaten ein Fahrbereich für das Kraftfahrzeug festgelegt werden, der durch das Kraftfahrzeug befahrbar ist. Zudem werden insbesondere Eigenschaften des Kraftfahrzeugs wie ein maximaler Lenkwinkel und Reibwerte der Reifen berücksichtigt. So kann beispielsweise aus den Reibwerten der Reifen, einer bekannten oder durch Sensoren ermittelten Straßeneigenschaft, Witterungsinformationen und dem Gesamtgewicht des Kraftfahrzeugs, das beispielsweise mithilfe von Sensoren in der Kraftfahrzeugfederung ermittelt wird, eine maximale Reibkraft ermittelt werden, die durch die Gesamtbeschleunigungen des Kraftfahrzeugs nicht überstiegen werden soll.

In Schritt S3 werden unter Berücksichtigung der Randbedingungen fahrbare Trajektorien und/oder Trajektorienscharen bestimmt. Die Bestimmung der fahrbaren Trajektorien und Trajektorienscharen ist bereits mit Bezug auf Fig. 1 bis Fig. 3 erläutert.

In Schritt S4 wird überprüft, ob wenigstens eine fahrbare Trajektorie unter den in Schritt S2 bestimmten Randbedingungen ermittelt werden konnte. Konnte eine solche fahrbare Trajektorie oder Trajektorienschar ermittelt werden, so wird in Schritt S5 ein Fahrmöglichkeitswert bestimmt, der ein Maß für die Menge der Fahrmöglichkeiten eines Fahrers ist. Der Fahrmöglichkeitswert kann insbesondere aus der Anzahl der berechneten Trajektorien oder der Breite eines Wertebereichs eines Parameters, der eine Trajektorienschar parametrisiert, berechnet werden. Weitere Möglichkeiten zur Berechnung von Fahrmöglichkeitswerten sind bereits obig mit Bezug auf Fig. 1 und 2 diskutiert.

In Schritt S6 wird der Fahrmöglichkeitswert mit einem Grenzwert verglichen. Der Grenzwert kann fest vorgegeben sein, er kann jedoch auch abhängig von einer Fahrervorgabe oder einer ermittelten Fahrereigenschaft angepasst werden. Ist der Fahrmöglichkeitswert größer oder gleich einem vorgegebenen Grenzwert, so ist davon auszugehen, dass der Fahrer ausreichende Fahrmöglichkeiten hat, um das Kraftfahrzeug selbst sicher weiterzuführen. Damit kann das Verfahren ab Schritt S1 wiederholt werden, ohne dass ein Hinweis ausgegeben oder in das Fahrgeschehen eingegriffen wird. Unterschreitet der Fahrmöglichkeitswert den vorgegebenen Grenzwert, so kann in Schritt S7 eine Warnung an den Fahrer ausgegeben werden. Im gezeigten Ausführungsbeispiel zeigt die ausgegebene Warnung dem Fahrer direkt an, dass ein Wechsel in einen autonomen Fahrbetrieb erfolgt. Alternativ wäre es möglich, bei Unterschreiten eines ersten Grenzwertes durch den Fahrmöglichkeitswert zunächst nur eine Warnung auszugeben und erst bei Unterschreiten eines zweiten, niedrigeren Grenzwertes für den Fahrmöglichkeitswert in den Fahrbetrieb einzugreifen. In Schritt S7 kann neben der Warnung an den Fahrer auch eine Warnung an weitere Verkehrsteilnehmer erfolgen. Hierzu können beispielsweise Warnleuchten am Kraftfahrzeug aktiviert werden, ein akustischer Signalgeber, beispielsweise eine Hupe, angesteuert werden oder es kann eine direkte Fahrzeug-zu-Fahrzeug-Kommunikation mithilfe einer Kommunikationseinrichtung erfolgen.

In Schritt S8 wird aus den zuvor bestimmten Trajektorien bzw. Trajektorienscharen eine Steuertrajektorie bestimmt, entlang der das Kraftfahrzeug im zweiten Betriebsmodus, insbesondere autonom und ohne Eingriffsmöglichkeit des Fahrers, geführt wird. Da bereits in Schritt S4 ermittelt wurde, dass wenigstens eine unter den gegebenen Randbedingungen fahrbare Trajektorie bestimmt wurde, ist damit eine Führung des Kraftfahrzeugs entlang einer vorberechneten Trajektorie möglich. Im Regelfall wird damit erreicht, dass der Fahrbetrieb des Kraftfahrzeugs fortgesetzt werden kann, also dass das Kraftfahrzeug nicht bis zum Stillstand gebremst werden muss.

Da nun eine Steuertrajektorie vorgegeben ist, kann in Schritt S9 das Kraftfahrzeug in einem zweiten Betriebsmodus des Fahrerassistenzsystems entlang dieser Steuertrajektorie geführt werden. Die Führung des Kraftfahrzeugs kann damit insbesondere vollständig autonom erfolgen, so dass das Fahrerassistenzsystem die gesamte Längs- und Querführung des Kraftfahrzeugs übernimmt. Dabei ist es insbesondere möglich, dass die Fahreingriffes des Fahrerassistenzsystems nicht durch den Fahrer übersteuert werden können.

Insbesondere nach einem kurzen Warteintervall wird in Schritt S10 überprüft, ob die Rückschaltbedingung erfüllt ist, also insbesondere, ob die Verkehrssituation und Streckenführung eine sichere Rückgabe der Fahrzeugkontrolle an einen Fahrer ermöglichen. Ist eine solche Rückgabe möglich, so kann die Fahrzeugkontrolle dem Fahrer übergeben werden und das Verfahren kann in Schritt S1 fortgesetzt werden. Dabei ist es insbesondere möglich, dass zunächst ein Hinweis an den Fahrer ausgegeben wird, dass eine solche Rückübernahme der Fahrzeugführung durch den Fahrer gewünscht ist und erst nach einer Bedienhandlung des Fahrers, die einen Rückübernahmewillen anzeigt, kann die Rückübergabe erfolgen.

Wird in Schritt S10 ermittelt, dass eine Rückschaltbedingung nicht erfüllt ist, so werden in Schritt S11 erneut Ego- und Umfelddaten ermittelt und in Schritt S12 wird soweit notwendig die Steuertrajektorie angepasst. Anschließend wird der autonome Fahrbetrieb in Schritt S9 fortgesetzt.

Wird in Schritt S4 ermittelt, dass unter den in Schritt S3 bestimmten Randbedingungen keine fahrbare Trajektorie ermittelt werden konnte, so erfolgt in Schritt S13 eine Anpassung der Randbedingungen. Hierbei kann insbesondere eine Fahrereigenschaft, insbesondere ein Komfortbedürfnis des Fahrers, bei der Bestimmung der Randbedingungen nicht länger berücksichtigt werden. Zudem ist es möglich, beispielsweise Sicherheitsabstände zu Objekten oder Sicherheitsabstände zu maximal möglichen Beschleunigungen zu reduzieren oder Bereiche als Fahrbereich zu definieren, die zuvor aus dem Fahrbereich ausgeschlossen waren. Anschließend kann in Schritt S14 eine Neuberechnung der fahrbaren Trajektorien erfolgen. Hierbei kann insbesondere direkt eine Steuertrajektorie für das Kraftfahrzeug ermittelt werden, da eine Unmöglichkeit in Schritt S3 eine Trajektorie unter den in Schritt S2 bestimmten Randbedingungen zu bestimmen im Ausführungsbeispiel dazu führt, dass das Fahrerassistenzsystem in den Fahrbetrieb eingreifen soll.

In Schritt S15 wird überprüft, ob in Schritt S14 zumindest eine Trajektorie ermittelt werden konnte. Ist dies der Fall, kann in Schritt S16 in dem Fall, in dem Schritt S14 mehrere Trajektorien bestimmt wurden, eine dieser Trajektorien als Steuertrajektorie ausgewählt werden. Anschließend wird das Kraftfahrzeug im Schritt S9 wie beschrieben durch das Fahrerassistenzsystem geführt.

Wird im Schritt S15 ermittelt, dass auch nach der Anpassung der Randbedingungen im Schritt S13 weiterhin keine fahrbare Trajektorie ermittelt werden kann, wird in Schritt S17 eine Notfalltrajektorie berechnet. Die Unmöglichkeit, selbst nach Anpassung der Randbedingungen eine fahrbare Trajektorie zu ermitteln, bedeutet, dass es nicht möglich ist, das Kraftfahrzeug sicher weiterzuführen. Daher wird in Schritt S17 eine Trajektorie bestimmt, um das Kraftfahrzeug, soweit möglich, sicher abzustellen, und falls dieses nicht möglich ist, die Folgen unvermeidbarer Kollisionen oder anderer ungewünschter Fahrbewegungen zu verringern. Verfahren zur Bestimmung einer solchen Notfalltrajektorie sind im der Stand der Technik bekannt und sollen daher nicht weiter erläutert werden.

In Schritt S18 wird das Kraftfahrzeug entlang dieser Notfalltrajektorie geführt, wobei insbesondere auch direkt weitere Sicherheitssysteme wie Fußgängerschutzsysteme, Rückhaltesysteme oder Ähnliches angesteuert werden können.

In diesem Fall endet das Verfahren in Schritt S19 typischerweise mit einem stehenden Kraftfahrzeug.

## Patentansprüche

1. Kraftfahrzeug umfassend wenigstens ein Fahrerassistenzsystem (2), das insbesondere ein Sicherheitssystem ist und das ausgebildet ist, unter wenigstens einer Randbedingung fahrbare Trajektorien (20, 21, 22, 34, 35, 36, 37, 38, 39, 40, 41) und/oder Trajektorienscharen durch Auswertung von das Kraftfahrzeug (1) betreffenden Egodaten und das Kraftfahrzeugumfeld betreffenden Umfelddaten zu berechnen, aus den berechneten Trajektorien (20, 21, 22, 34, 35, 36, 37, 38, 39, 40, 41) und/oder Trajektorienscharen einen Fahrmöglichkeitswert zu bestimmen, der ein Maß für die Menge der Fahrmöglichkeiten eines Fahrers ist, bei Erfüllung einer Auslösebedingung oder wenigstens einer von mehreren Auslösebedingungen in einen zweiten Betriebsmodus zu wechseln und das Kraftfahrzeug (1) im zweiten Betriebsmodus entlang einer der berechneten Trajektorien (20, 21, 22, 34, 35, 36, 37, 38, 40, 41) oder einer durch eine der berechneten Trajektorienscharen beschriebenen Schartrajektorie zu führen, wobei wenigstens eine der Auslösebedingungen das Unterschreiten eines vorgegebenen Grenzwertes durch den Fahrmöglichkeitswert ist, **dadurch gekennzeichnet, dass** die Führung des Kraftfahrzeugs im zweiten Betriebsmodus ohne Eingriffsmöglichkeit durch den Fahrer autonom erfolgt, wobei das Fahrerassistenzsystem (2) ausgebildet ist, im zweiten Betriebsmodus den Motor (11) und/oder das vorzugsweise automatische Getriebe (12) des Kraftfahrzeugs ohne Eingriffsmöglichkeit durch den Fahrer autonom zu steuern.

2. Kraftfahrzeug nach Anspruch 1,
**dadurch gekennzeichnet,**
**dass** das Fahrerassistenzsystem (2) zur Bestimmung wenigstens eines an der Position (42, 43, 44, 45,46, 47, 48, 49) des Kraftfahrzeugs beginnenden Fahrbereichs, der durch das Kraftfahrzeug befahrbar ist, ausgebildet ist, wobei die Randbedingung oder eine der Randbedingungen ist, dass die berechneten Trajektorien (20, 21, 22, 34, 35, 36, 37, 38, 39, 40, 41) und/oder Trajektorienscharen vollständig innerhalb des Fahrbereichs verlaufen.

3. Kraftfahrzeug nach Anspruch 1 oder 2,
**dadurch gekennzeichnet,**
**dass** das Fahrerassistenzsystem (2) ausgebildet ist, die Trajektorien (20, 21, 22, 34, 35, 36, 37, 38, 39, 40, 41) derart zu berechnen, dass sie durch einen vorgegebenen oder anpassbaren Abstand wenigstens eines ihrer Parameter, insbesondere einer Ortskoordinate, beabstandet sind.

4. Kraftfahrzeug nach einem der vorangehenden Ansprüche,
**dadurch gekennzeichnet,**
**dass** das Fahrerassistenzsystem (2) zur Bestimmung wenigstens eines Geschwindigkeitsprofils für jede der berechneten Trajektorien (20, 21, 22, 34, 35, 36, 37, 38, 39, 40, 41) und/oder jede der berechneten Trajektorienscharen ausgebildet ist.

5. Kraftfahrzeug nach einem der vorangehenden Ansprüche,
**dadurch gekennzeichnet,**
**dass** der Fahrmöglichkeitswert die Anzahl der berechneten Trajektorien (20, 21, 22, 34, 35, 36, 37, 38, 39, 40, 41) ist oder dass das Fahrerassistenzsystem ausgebildet ist, den Fahrmöglichkeitswert aus der Breite eines Wertebereichs wenigstens eines Parameters wenigstens einer der berechneten Trajektorienscharen zu bestimmen.

6. Kraftfahrzeug nach einem der vorangehenden Ansprüche,
**dadurch gekennzeichnet,**
**dass** das Fahrerassistenzsystem (2) ausgebildet ist, im zweiten Betriebsmodus die Lenkung (8) und/oder das Bremssystem (10) des Kraftfahrzeugs ohne Eingriffsmöglichkeit durch den Fahrer autonom zu steuern.

7. Kraftfahrzeug nach einem der vorangehenden Ansprüche,
**dadurch gekennzeichnet,**
**dass** das Fahrerassistenzsystem (2) dazu ausgebildet ist, in dem Fall, wenn keine unter der Randbedingung fahrbare Trajektorie (20, 21, 22, 34, 35, 36, 37, 38, 39, 40, 41) oder Trajektorienschar berechnet werden kann, die Randbedingung oder wenigstens eine der Randbedingungen anzupassen und wenigstens eine unter der angepassten Randbedingung fahrbare Trajektorie (20, 21, 22, 34, 35, 36, 37, 38, 39, 40, 41) und/oder Trajektorienschar zu berechnen.

8. Kraftfahrzeug nach einem der vorangehenden Ansprüche,
**dadurch gekennzeichnet,**
**dass** das Fahrerassistenzsystem (2) dazu ausgebildet ist, in dem Fall, wenn keine unter der, insbesondere angepassten, Randbedingung fahrbare Trajektorie (20, 21, 22, 34, 35, 36, 37, 38, 39, 40, 41) oder Trajektorienschar berechnet werden kann, eine Notfalltrajektorie zu bestimmen.

9. Kraftfahrzeug nach einem der vorangehenden Ansprüche,
**dadurch gekennzeichnet,**
**dass** die Auslösebebedingung oder wenigstens eine der Auslösebebedingungen und/oder die Randbedingung oder eine der Randbedingungen zur Berechnung der fahrbaren Trajektorien (20, 21, 22, 34, 35, 36, 37, 38, 39, 40, 41) und/oder Trajektorienscharen und/oder die Auswahl, entlang welcher der Trajektorien oder Schartrajektorien die Führung des Kraftfahrzeugs erfolgt, von einer vorgegebenen oder durch das Fahrerassistenzsystem ermittelten Eigenschaft des Fahrers abhängig ist.

10. Verfahren zur Steuerung eines Kraftfahrzeugs, umfassend wenigstens ein Fahrerassistenzsystem, umfassend die Schritte:
- Erfassen von das Kraftfahrzeug betreffenden Egodaten und das Kraftfahrzeugumfeld betreffenden Umfelddaten,
- Vorausberechnen von unter wenigstens einer Randbedingung fahrbaren Trajektorien und/oder Trajektorienscharen durch Auswertung von das Kraftfahrzeug betreffenden Egodaten und das Kraftfahrzeugumfeld betreffenden Umfelddaten durch das Fahrerassistenzsystem,
- Bestimmen eines Fahrmöglichkeitswertes aus den berechneten Trajektorien und/oder Trajektorienscharen, der ein Maß für die Menge der Fahrmöglichkeiten eines Fahrers ist, durch das Fahrerassistenzsystem,
- Überprüfen, ob der Fahrmöglichkeitswert einen vorgegebenen Grenzwertes unterschreitet durch das Fahrerassistenzsystem, und
- Führen des Kraftfahrzeugs ohne Eingriffsmöglichkeit durch den Fahrer autonom entlang einer der berechneten Trajektorien oder einer durch eine der berechneten Trajektorienscharen beschriebenen Schartrajektorie durch das Fahrerassistenzsystem, falls der Fahrmöglichkeitswert den Grenzwert unterschreitet, wobei durch das Fahrerassistenzsystem der Motor und/oder das Getriebe des Kraftfahrzeugs ohne Eingriffsmöglichkeit durch den Fahrer autonom angesteuert werden.

## Claims

1. Motor vehicle comprising at least one driver assistance system (2), which is in particular a safety system and which is formed to calculate trajectories (20, 21, 22, 34, 35, 36, 37, 38, 39, 40, 41) and/or trajectory groups which are driveable under at least one boundary condition by analysing egodata relating to the motor vehicle (1) and environmental data relating to the motor vehicle environment, to determine from the calculated trajectories (20, 21, 22, 34, 35, 36, 37, 38, 39, 40, 41) and/or trajectory groups a travel possibility value which is a measure for the quantity of travel possibilities of a driver, to change into a second operating mode on fulfilment of a trigger condition or at least one of several trigger conditions, and to guide the motor vehicle (1) in the second operating mode along one of the calculated trajectories (20, 21, 22, 34, 35, 36, 37, 38, 40, 41) or a group trajectory described by one of the calculated trajectory groups, wherein at least one of the trigger conditions is the falling below of a predetermined limit value by the travel possibility value, **characterised in that** the guiding of the motor vehicle in the second operating mode occurs autonomously without possibility of intervention by the driver, wherein the driver assistance system (2) is formed to control the motor (11) and/or the preferably automatic gears (12) of the motor vehicle in the second operating mode autonomously without possibility of intervention by the driver.

2. Motor vehicle according to claim 1,
**characterised in that**
the driver assistance system (2) is formed to determine at least one travel range beginning at the position (42, 43, 44, 45, 46, 47, 48, 49) of the motor vehicle, said travel range being able to be driven by the motor vehicle, wherein the boundary condition or one of the boundary conditions is that the calculated trajectories (20, 21, 22, 34, 35, 36, 37, 38, 39, 40, 41) and/or trajectory groups run completely within the travel range.

3. Motor vehicle according to claim 1 or 2,
**characterised in that**
the driver assistance system (2) is formed to calculate the trajectories (20, 21, 22, 34, 35, 36, 37, 38, 39, 40, 41) in such a way that they are spaced apart by a predetermined or adaptable distance of at least one of their parameters, in particular a spatial coordinate.

4. Motor vehicle according to any one of the preceding claims,
**characterised in that**
the driver assistance system (2) is formed to determine at least one speed profile for each of the calculated trajectories (20, 21, 22, 34, 35, 36, 37, 38, 39, 40, 41) and/or each of the calculated trajectory groups.

5. Motor vehicle according to any one of the preceding claims,
**characterised in that**
the travel possibility value is the number of the calculated trajectories (20, 21, 22, 34, 35, 36, 37, 38, 39, 40, 41) or the driver assistance system is formed to determine the travel possibility value from the breadth of a value range of at least one parameter of at least one of the calculated trajectory groups.

6. Motor vehicle according to any one of the preceding claims,
**characterised in that**
the driver assistance system (2) is formed to control the steering (8) and/or the brake system (10) of the motor vehicle in the second operating mode autonomously without possibility of intervention by the driver.

7. Motor vehicle according to any one of the preceding claims,
**characterised in that**
the driver assistance system (2) is formed, in the case that no trajectory (20, 21, 22, 34, 35, 36, 37, 38, 39, 40, 41) or trajectory group which is driveable under the boundary condition can be calculated, to adapt the boundary condition or at least one of the bound conditions and to calculate at least one trajectory (20, 21, 22, 34, 35, 36, 37, 38, 39, 40, 41) and/or trajectory group which is driveable under the adapted boundary condition.

8. Motor vehicle according to any one of the preceding claims,
**characterised in that**
the driver assistance system (2) is formed, in the case that no trajectory (20, 21, 22, 34, 35, 36, 37, 38, 39, 40, 41) or trajectory group which is driveable under the, in particular adapted, boundary condition can be calculated, to determine an emergency trajectory.

9. Motor vehicle according to any one of the preceding claims,
**characterised in that**
the trigger condition or at least one of the trigger conditions and/or the boundary condition or one of the boundary conditions to calculate the drivable trajectories (20, 21, 22, 34, 35, 36, 37, 38, 39, 40, 41) and/or trajectory groups and/or the selection along which of the trajectories or group trajectories the guiding of the motor vehicle occurs is dependent on a predetermined property of the driver or a property of the driver determined by the driver assistance system.

10. Method to control a motor vehicle, comprising at least one driver assistance system, comprising the steps:
- determining egodata relating to the motor vehicle and environmental data relating to the motor vehicle environment,
- predicting trajectories and/or trajectory groups which are driveable under at least one boundary condition by analysing egodata relating to the motor vehicle and environmental data relating to the motor vehicle environment by the driver assistance system,
- determining a travel possibility value from the calculated trajectories and/or trajectory groups which is a measure for the quantity of travel possibilities of a driver by the driver assistance system,
- checking whether the travel possibility value falls below a predetermined limit value by the driver assistance system, and
- guiding the motor vehicle autonomously without possibility of intervention by the driver along one of the calculated trajectories or a group trajectory described by one of the calculated trajectory groups by the driver assistance system if the travel possibility value falls below the limit value, wherein the motor and/or the gears of the motor vehicle are controlled autonomously by the driver assistance system without possibility of intervention by the driver.

## Revendications

1. Véhicule automobile comprenant au moins un système d'assistance au conducteur (2), qui est en particulier un système de sécurité et est conçu pour calculer des trajectoires (20, 21, 22, 34, 35, 36, 37, 38, 39, 40, 41) praticables dans au moins une condition marginale et/ou des ensembles de trajectoires par évaluation de données propres au véhicule automobile et de données ambiantes concernant l'environnement du véhicule automobile (1), déterminer parmi les trajectoires (20, 21, 22, 34, 35, 36, 37, 38, 39, 40, 41) et/ou les ensembles de trajectoires calculés une valeur de possibilité de conduite, qui est une mesure de la quantité de possibilités de conduite d'un conducteur, passer, lorsqu'une condition de déclenchement ou au moins l'une de plusieurs conditions de déclenchement est remplie, dans un second mode de fonctionnement et piloter le véhicule automobile (1) dans le second mode de fonctionnement le long d'une des trajectoires (20, 21, 22, 34, 35, 36, 37, 38, 39, 40, 41) calculées ou d'une trajectoire d'ensemble décrite par un des ensembles de trajectoires calculés, dans lequel au moins l'une des conditions de déclenchement est le passage en dessous d'une valeur limite prédéfinie par la valeur de possibilité de conduite, **caractérisé en ce que** la conduite du véhicule automobile dans la second mode de fonctionnement se fait de manière autonome sans possibilité d'intervention par le conducteur, dans lequel le système d'assistance au conducteur (2) est conçu pour commander de manière autonome, dans le second mode de fonctionnement, le moteur (11) et/ou la transmission de préférence automatique (12) du véhicule automobile sans possibilité d'intervention par le conducteur.

2. Véhicule automobile selon la revendication 1,
**caractérisé en ce que** :
le système d'assistance au conducteur (2) est conçu pour déterminer au moins une autonomie démarrant dans la position (42, 43, 44, 45, 46, 47, 48, 49) du véhicule automobile, qui peut être praticable par le véhicule automobile, dans lequel la condition marginale ou une des conditions marginales est que les trajectoires (20, 21, 22, 34, 35, 36, 37, 38, 39, 40, 41) et/ou les ensembles de trajectoires calculés se situent complètement dans l'autonomie.

3. Véhicule automobile selon la revendication 1 ou 2,
**caractérisé en ce que** :
le système d'assistance au conducteur (2) est conçu pour calculer les trajectoires (20, 21, 22, 34, 35, 36, 37, 38, 39, 40, 41) en sorte qu'elles soient espacées d'une distance prédéfinie ou adaptable au moins d'un de leurs paramètres, en particulier d'une coordonnée locale.

4. Véhicule automobile selon l'une quelconque des revendications précédentes,
**caractérisé en ce que** :
le système d'assistance au conducteur (2) est conçu pour déterminer au moins un profil de vitesse pour chacune des trajectoires calculées (20, 21, 22, 34, 35, 36, 37, 38, 39, 40, 41) et/ou chacun des ensembles de trajectoires calculés.

5. Véhicule automobile selon l'une quelconque des revendications précédentes,
**caractérisé en ce que** :
la valeur de possibilité de conduite est le nombre des trajectoires calculées (20, 21, 22, 34, 35, 36, 37, 38, 39, 40, 41) ou le système d'assistance au conducteur est conçu pour déterminer la valeur de possibilité de conduite sur la largeur d'une plage de valeurs au moins d'un paramètre au moins d'un des ensembles de trajectoires calculés.

6. Véhicule automobile selon l'une quelconque des revendications précédentes,
**caractérisé en ce que** :
le système d'assistance au conducteur (2) est conçu pour commander de manière autonome, dans le second mode de fonctionnement, la direction (8) et/ou le système de freinage (10) du véhicule automobile sans possibilité d'intervention par le conducteur.

7. Véhicule automobile selon l'une quelconque des revendications précédentes,
**caractérisé en ce que** :
le système d'assistance au conducteur (2) est conçu, dans le cas où l'on ne peut calculer aucune trajectoire praticable dans la condition marginale (20, 21, 22, 34, 35, 36, 37, 38, 39, 40, 41) ou aucun ensemble de trajectoires, pour adapter la condition marginale ou au moins une des conditions marginales et calculer au moins une trajectoire praticable dans la condition marginale adaptée (20, 21, 22, 34, 35, 36, 37, 38, 39, 40, 41) et/ou un ensemble de trajectoires.

8. Véhicule automobile selon l'une quelconque des revendications précédentes,
**caractérisé en ce que** :
le système d'assistance au conducteur (2) est conçu, dans le cas où l'on ne peut calculer aucune trajectoire (20, 21, 22, 34, 35, 36, 37, 38, 39, 40, 41) praticable dans la condition marginale en particulier adaptée ou aucun ensemble de trajectoires pour déterminer une trajectoire d'urgence.

9. Véhicule automobile selon l'une quelconque des revendications précédentes,
**caractérisé en ce que** :
la condition de déclenchement ou au moins une des conditions de déclenchement et/ou la condition marginale ou l'une des conditions marginales pour le calcul des trajectoires praticables (20, 21, 22, 34, 35, 36, 37, 38, 39, 40, 41) et/ou des ensembles de trajectoires et/ou le choix selon celle des trajectoires ou des trajectoires d'ensembles où se fait la conduite du véhicule automobile, dépend ou dépendent d'une propriété du conducteur prédéfinie ou fournie par le système d'assistance au conducteur.

10. Procédé de commande d'un véhicule automobile comprenant au moins un système d'assistance au conducteur, comprenant les étapes consistant à :
- déterminer les données propres au véhicule automobile et les données ambiantes concernant l'environnement du véhicule automobile,
- calculer à l'avance des trajectoires praticables dans au moins une condition marginale et/ou des ensembles de trajectoires par évaluation des données propres au véhicule automobile et des données ambiantes concernant l'environnement du véhicule automobile par le système d'assistance au conducteur,
- déterminer une valeur de possibilité de conduite parmi les trajectoires et/ou les ensembles de trajectoires calculés, qui est une mesure de la quantité de possibilités de conduite d'un conducteur, par le système d'assistance au conducteur,
- vérifier si la valeur de possibilité de conduite se situe en dessous d'une valeur limite prédéfinie par le système d'assistance au conducteur, et
- conduire le véhicule automobile sans possibilité d'intervention par le conducteur de manière autonome le long de l'une des trajectoires calculées ou d'une trajectoire d'ensembles décrite par l'un des ensembles de trajectoires calculés par le système d'assistance au conducteur au cas où la valeur de possibilité de conduite se situe en dessous de la valeur limite, dans lequel le moteur et/ou la transmission du véhicule automobile est/ou sont commandés par le système d'assistance au conducteur de manière autonome sans possibilité d'intervention par le conducteur.
